# EUROPEAN PATENT SPECIFICATION

(11) **EP 4 596 084 B1**
(45) Date of publication and mention of the grant of the patent: **28.10.2026**
(21) Application number: 24221383.3
(22) Date of filing: 19.12.2024
(51) Int. Cl.: G06Q 50/06, B01D 53/00, G06N 20/00, E03B 3/28, B01D 53/26

(54) **ARTIFICIALLY INTELLIGENT ATMOSPHERIC WATER GENERATION SYSTEM CONTROL**
STEUERUNG EINES KÜNSTLICH INTELLIGENTEN ATMOSPHÄRISCHEN WASSERERZEUGUNGSSYSTEMS
COMMANDE DE SYSTÈME DE GÉNÉRATION D'EAU ATMOSPHÉRIQUE ARTIFICIELLEMENT INTELLIGENTE

(30) Priority: 02.02.2024 US 202418431011
(43) Date of publication of application: 06.08.2025
(73) Proprietor: Genesis Systems Holdings Inc., Tampa, FL 33621 (US)
(72) Inventor: Stuckenberg, David, Tampa (US); Francis, Kurt, Yuma (US); Erickson, Owen, Largo (US); Mixson, Zach, Land O'Lakes (US)
(74) Representative: Swindell & Pearson Limited

(56) References cited:
- US-A1- 2020 332 498
- US-A1- 2022 228 351
- US-A1- 2023 241 551
- IMAD LEKOUCH ET AL: "Rooftop dew, fog and rain collection in southwest Morocco and predictive dew modeling using neural networks", JOURNAL OF HYDROLOGY, ELSEVIER, AMSTERDAM, NL, vol. 448, 1 April 2012 (2012-04-01), pages 60 - 72, XP028521296, ISSN: 0022-1694, [retrieved on 20120413], DOI: 10.1016/J.JHYDROL.2012.04.004

## Description

### CROSS-REFERENCE TO RELATED APPLICATIONS

This patent application relates to U.S. Patent Appl. No. 17/552,173, filed December 15, 2021, which claims priority from Provisional Appl. Ser. No. 63/126,860, filed December 17, 2020; this patent application additionally relates to U.S. Patent Appl. No. 16/782,808, filed February 5, 2020, which is a continuation of U.S. Patent Appl. No. 15/850,870, filed December 21, 2017, which claims priority from Provisional Application Ser. No. 62/437,471, filed December 21, 2016; Provisional Application Ser. No. 62/459,462, filed February 15, 2017; and Provisional Application Ser. No. 62/459,478, filed February 15, 2017.

In addition, this patent application relates to Patent Appl. No.: 18/179,750, filed on March 7, 2023; US Patent Appl. No.: 18/199,427, filed on May 19, 2023; and US Patent Appl. No.: 18/538,832, filed on December 13, 2023.

### BACKGROUND

The amount of freshwater available for human consumption, plant irrigation, livestock and herd sustenance, commercial and/or industrial usage, and other purposes has generally been overtaken by the amount of freshwater needed for such purposes. Particularly in arid climates characterized by minimal annual rainfall and without access to other freshwater sources, maintaining an adequate amount of water for human and/or animal consumption and usage has become increasingly expensive in recent years. Processes such as desalination, water filtration and/or purification, groundwater (e.g., aquifer) exploitation, and other processes are often used in combination to supply freshwater to various geographical regions, depending on the relative availability and expense of each water sourcing process.

Water shortages in certain geographical regions are also at least partially responsible for food shortages in certain areas of the globe as well. Where water is not readily available for crop irrigation and for hydrating livestock, basic nutritional foods may be difficult to cultivate, and may be difficult or expensive to procure in an open market.

Atmospheric water generation (AWG) systems may help expand the availability of freshwater, particularly in arid geographical areas and/or areas with no access to standing water or sub-surface water or in areas where water sources have become contaminated. However, such systems require significant energy resources to operate and the ratio of water-produced to energy-required varies depending on several factors (e.g., time of day, environmental conditions, and/or the like). Traditional AWG systems are generally controlled through the use of programable logic controllers, microcontrollers, or microprocessors that may take inputs from local sensors and manual buttons on the system. However, these inputs only traditionally account for a subset of parameters that impact the energy expenditure of a system and may not account for real time or forecasted changes in an environment, such as ambient/forecasted weather, and/or the like, that may significantly impact the usage of the system. This may lead to processing inefficiencies that reduce the efficacy of AWG systems and, in some cases, such as in arid geographical areas with low humidity levels, leads to irregular and unreliable sources of freshwater. Thus, there is a need for automated control of AWG systems to optimize the performance, reliability, and energy usage of such systems.

"Rooftop dew, fog and rain collection in southwest Morocco and predictive dew modeling using neural networks", Journal of Hydrology, Elsevier, Amsterdam, NL, vol. 448, 1 April 2012, pages 60-72, discusses an investigation of two coastal sites in a region of southwest Morocco to determine the amount of dew, fog and rain that could be collected from rooftops for household use. Meteorological data were recorded and a predictive model for dew yield was developed based on artificial neural networks.

US 2020/0332498 A1 discloses a system for generating liquid water. The system comprises a thermal desiccant unit.

### BRIEF SUMMARY

The invention is defined in the appended claims. Certain embodiments in this disclosure provide for the use of artificial intelligence to control and enhance the production of atmospheric water generation systems. Various embodiments are directed to an AWG system that includes a control system, such as stand-alone control system or edge device connected to a centralized server, and one or more controller for automatically performing optimized atmospheric water generation operations based, at least in part, on real-time, historical, and forecasted parameters for an environment. By doing so, an AWG system is provided that utilizes artificial intelligence to process inputs from multiple sources that include local and external sensors, user input, external informational sources, and/or the like to identify an optimal operation (e.g., timing and degree of use) of the AWG system in real or near-real time. This, in turn, enables control instructions for automatically controlling one or more sub-systems of the AWG system in accordance with the optimal operation of the system.

In some embodiments, a computer-implemented method comprising receiving, by one or more processors, one or more optimization inputs for a time and a location associated with an operation of an atmospheric water generation system; generating, by the one or more processors and using an optimization machine learning model, one or more time-based energy predictions for the atmospheric water generation system based at least in part on the one or more optimization inputs; and communicating, by the one or more processors, one or more control instructions to one or more controllers of the atmospheric water generation system to initiate one or more atmospheric water generation operations based at least in part on the one or more time-based energy predictions.

In various embodiments, the optimization machine learning model is previously trained, using one or more supervisory training techniques, based at least in part on a training dataset comprising a plurality of labeled optimization training entries and each of the plurality of labeled optimization training entries comprises a set of historical optimization inputs and historical performance data corresponding to the set of historical optimization inputs. The historical performance data is indicative of a ground truth water output from the atmospheric water generation system based at least in part on one or more historical atmospheric water generation operations.

In various embodiments, the computer-implemented method further comprises receiving, by the one or more processors, energy usage data and performance data corresponding to the one or more atmospheric water generation operations; and storing, by the one or more processors, the one or more optimization inputs, the energy usage data, and the performance data as a labeled optimization training entry in the training dataset.

In various embodiments, the computer-implemented method further comprises retraining, by the one or more processors, the optimization machine learning model based at least in part on the labeled optimization training entry.

In various embodiments, the computer-implemented method further comprises generating, by the one or more processors, an optimized energy output for the atmospheric water generation system based at least in part on the one or more time-based energy predictions and water usage data for the location corresponding to the atmospheric water generation system; and generating, by the one or more processors, the one or more control instructions based at least in part on the optimized energy output.

In various embodiments, the water usage data is based, at least in part, on user input or sensor data from the atmospheric water generation system, the one or more optimization inputs comprise sensor data from the atmospheric water generation system, or current weather data or prospective weather data from one or more external informational sources.

In various embodiments, the atmospheric water generation system is associated with a cluster of a plurality of connected atmospheric water generation systems, each of the plurality of connected atmospheric water generation systems are associated with a different location, and the one or more optimization inputs comprise remote sensor data from each of the plurality of connected atmospheric water generation systems.

In various embodiments, communicating the one or more control instructions comprises providing, by the one or more processors, the one or more control instructions to an edge device that is (i) physically disposed on the atmospheric water generation system and (ii) electrically connected to at least one of the one or more controllers of the atmospheric water generation system.

In some embodiments, a computing system comprises memory and one or more processors communicatively coupled to the memory. The one or more processors are configured to receive one or more optimization inputs for a time and a location associated with an operation of an atmospheric water generation system; generate, using an optimization machine learning model, one or more time-based energy predictions for the atmospheric water generation system based at least in part on the one or more optimization inputs; and communicate one or more control instructions to one or more controllers of the atmospheric water generation system to initiate one or more atmospheric water generation operations based at least in part on the one or more time-based energy predictions.

In various embodiments, the optimization machine learning model is previously trained, using one or more supervisory training techniques, based at least in part on a training dataset comprising a plurality of labeled optimization training entries and each of the plurality of labeled optimization training entries comprises a set of historical optimization inputs and performance data corresponding to the set of historical optimization inputs.

In various embodiments, the performance data is indicative of a ground truth water output from the atmospheric water generation system based at least in part on one or more historical atmospheric water generation operations.

In various embodiments, the one or more processors are further configured to generate an optimized energy output for the atmospheric water generation system based at least in part on the one or more time-based energy predictions and water usage data for the location corresponding to the atmospheric water generation system; and generate the one or more control instructions based at least in part on the optimized energy output.

In various embodiments, the water usage data is based, at least in part, on user input or sensor data from the atmospheric water generation system. In various embodiments, the one or more optimization inputs comprise sensor data from the atmospheric water generation system. In various embodiments, the one or more optimization inputs comprise current weather data or prospective weather data from one or more external informational sources.

In some embodiments, an atmospheric water generation system comprises one or more controllers electrically connected to one or more subsystems of the atmospheric water generation system; and a control system comprising memory and one or more processors communicatively coupled to the memory, the one or more processors configured to receive one or more optimization inputs for a time and a location associated with an operation of the atmospheric water generation system; generate, using an optimization machine learning model, one or more time-based energy predictions for the atmospheric water generation system based at least in part on the one or more optimization inputs; and communicate one or more control instructions to the one or more controllers to initiate one or more atmospheric water generation operations based at least in part on the one or more time-based energy predictions.

In various embodiments, the atmospheric water generation system is associated with a cluster of a plurality of connected atmospheric water generation systems, each of the plurality of connected atmospheric water generation systems are associated with a different location, and the one or more optimization inputs comprise remote sensor data from each of the plurality of connected atmospheric water generation systems.

### BRIEF DESCRIPTION OF THE SEVERAL VIEWS OF THE DRAWINGS

Reference will now be made to the accompanying drawings, which are not necessarily drawn to scale, and wherein:
FIGS. 1A-1B show a schematic of an example atmospheric water generation system according to one embodiment;
FIGS. 2A-2E illustrate example configurations of a membrane-based water extraction device according to various embodiments;
FIGS. 3A-3B illustrate example packing components within an absorber according to certain embodiments;
FIGS. 4-5 illustrate example growth habitats according to certain embodiments;
FIG. 6 illustrates an example growth habitat configuration according to one embodiment;
FIG. 7 illustrates example growth habit with a solar canopy showing different levels of opacity at different regions of the growth habitat according to certain embodiments.
FIG. 8 shows a schematic of an example AWG computing ecosystem according to one embodiment.
FIGS. 9-12 show schematics of example AWG computing ecosystems according to various embodiments.
FIG. 13 is a flowchart showing an example training process for generating an optimization machine learning model in accordance with some embodiments discussed herein.
FIG. 14 is a flowchart showing an example control process for optimally controlling an atmospheric water generation system using a trained optimization machine learning model in accordance with some embodiments discussed herein.

### DETAILED DESCRIPTION

The present disclosure more fully describes various embodiments with reference to the accompanying drawings. It should be understood that some, but not all embodiments are shown and described herein. Indeed, the embodiments may take many different forms, and accordingly this disclosure should not be construed as limited to the embodiments set forth herein. Rather, these embodiments are provided so that this disclosure will satisfy applicable legal requirements. Like numbers refer to like elements throughout.

### Overview

Some embodiments provide an AWG system that extracts water from atmospheric air. Even for low-humidity atmospheric air (air having a humidity of greater than zero), certain amounts of water may be extracted from the air, at least in part by contacting the atmospheric air with a rich desiccant solution under controlled conditions conductive to mass transfer of water from the atmospheric air (where it exists in vapor form) into a dilutant of the desiccant solution (where it exists in liquid form).

One example AWG system may utilize a membrane-separation module to separate the water from the desiccant solution. The membrane separation module defines two flow paths separated by a permeable membrane. The desiccant solution (a diluted desiccant solution after absorbing water from atmospheric air) flows on a first side of the permeable membrane and permeate water (e.g., in liquid form and/or in vapor form) flows on a second side of the permeable membrane. Water (e.g., water vapor) may penetrate the permeable membrane from the first side to the second side of the permeable membrane. The desiccant solution remains on the first side of the membrane and water remains on the second side of the membrane. The membrane-separation module may additionally enable control of the environmental conditions within the membrane-separation module to encourage mass flow of water across the permeable membrane from the desiccant solution on the first side of the membrane and into the flow of water (liquid water and/or water vapor) on the second side of the membrane. For example, the temperature and pressure may be increased on the first side of the membrane (e.g., by increasing the temperature and/or pressure of the desiccant solution flowing into the membrane separation module), and the temperature and pressure may be decreased on the second side of the membrane (e.g., by decreasing the temperature and/or pressure of the water flow on the second side of the membrane). Certain embodiments may comprise multiple membrane separation modules operating in series or in parallel and/or may comprise additional systems for extracting water from the desiccant solution.

Other examples of AWG systems may not include a membrane or include an alternative to the membrane described herein. For instance, the embodiments of the present disclosure may apply to membrane and/or membrane-less AWG systems that utilize other water extraction processes, such as electrostatic nucleation, photosensitive sorbent materials, and/or the like.

In certain embodiments, the AWG system may be integrated with one or more carbon dioxide filtration/capture modules, one or more greenhouse modules, one or more power generation modules, one or more control systems, and/or the like. For example, the source air intake into the AWG system may be routed through a carbon dioxide capture system (after extracting water vapor out of the atmospheric air) prior to exhausting the dry, dehumidified air to the surrounding environment. The captured carbon dioxide may be stored for later processing in a tank, or it may be released (e.g., in a monitored quantity) into one or more greenhouse modules to increase the carbon dioxide concentration within the greenhouse to thereby increase crop growth efficiency.

Moreover, a power generation module, which may comprise one or more renewable energy power generation systems, such as solar/photovoltaic, geothermal, and/or the like, or hydrocarbon-fuel based power generation systems, may be integrated with the AWG system to provide needed electrical and/or thermal energy inputs for the AWG processes. In the event that such power generation modules generate carbon dioxide or other exhaust gases, the exhaust gases of the power generation modules may be routed through the carbon dioxide capture modules to decrease the carbon dioxide production of the integrated system.

In certain embodiments, the AWG system may be integrated with one or more variable solar canopies. The variable solar canopy may be integrated into a greenhouse module (such that the solar canopy defines an exterior surface of the greenhouse). The variable solar canopy is configured to enable variable amounts of solar radiation through the solar canopy and into the interior of the greenhouse, thereby providing control of the growth environment (including the amount of light received) within the greenhouse environment. The variable solar canopy may provide location-specific adjustability of opacity of the solar canopy so as to enable location-specific customization of the amount of light passing through the solar canopy. The level of opacity of solar canopy may be adjusted by applying an external signal, such as an electric signal, to solar canopy using one or more controllers.

The AWG system may be integrated with a greenhouse, or any other water consuming environment including, as examples, a biosphere environment, a housing structure, a recreational facility, and/or the like. In various embodiments, the AWG system may be configurable based, at least in part, on the water usage requirements of a particular environment. For instance, the AWG system may generate water outputs based, at least in part, on input data, such as demographic information (e.g., age, sex, weight, height, etc.) for occupants of an environment, water usage information (e.g., current and/or historical water usage at different times, etc.), water-dependent facilities (e.g., number of sinks, toilets, showers, sprinkler, etc.), water storage capacities (e.g., storage tank size, etc.), and/or any other data reflective of an end user's water requirements. Due to the power requirements of the AWG system, the system may be optimized by selectively powering the system to satisfy water requirements for a particular environment using the lowest possible input energy.

In certain embodiments, the AWG system may be integrated with a control system (e.g., located at the AWG system) configured to selectively power, run, initiate, schedule, and/or the like one or more components of the AWG system. In other embodiments, the control system may be in communication with the AWG system, via the internet. The control system, for example, may include and/or be in communication with (e.g., via one or more wired and/or wireless connections, etc.) one or more controllers coupled (e.g., via one or more wired and/or wireless connections, etc.) with one or more subsystems of the AWG system, such as the humidity increasing system, the air preconditioning system, the power generation module, one or more valves (e.g., electromechanical mixing valves, etc.), motors, actuators, and/or the like. As described in further detail herein, the control system may be configured to selectively control the operation of the AWG system (e.g., via one or more control instructions to the one or more controllers, etc.) based, at least in part, on one or more optimization inputs. In some examples, the control system may autonomously operate the AWG system using an optimization module configured to satisfy water requirements for a particular environment using the lowest possible input energy.

In various embodiments, the optimization module may include computer-readable instructions configured to generate one or more energy outputs based, at least in part, on the one or more optimization inputs. The computer-readable instructions, for example, may define a machine learning, rule-based, and/or any other type of model configured to map a plurality of optimization inputs to an energy-based outputs, such as time-based energy prediction and/or an optimized energy output. An optimized energy output, for example, may include one or more real-time and/or scheduled operation instructions configured to initiate an operation of one or more components of the AWG system.

In various embodiments, the optimization module may include a machine learning model, such as one or more supervised, unsupervised, semi-supervised, reinforcement, and/or like learning models, which is configured to generate one or more energy-based outputs based, at least in part, on one or more optimization inputs. The machine learning model, for example, may be previously trained using labeled and/or unlabeled training data reflective of a plurality of training optimization inputs.

In some examples, the training data may include historical performance data (e.g., water outputs, etc.) and/or energy usage data from an AWG system paired with a plurality of corresponding historical optimization inputs. For instance, the historical performance and/or energy usage data may include ground truth labels for the plurality of corresponding historical optimization inputs. In some examples, the machine learning model may be continuously trained by recording real-time performance and/or energy usage data, generating training pairs by matching the real-time data with corresponding optimization inputs, and retraining the machine learning model with the new training pairs. This may advantageously enable the dynamic consideration of new and/or modified optimization inputs over time.

In certain embodiments, the control system may include memory configured to store the optimization module. In addition, or alternatively, the control system may include one or more edge devices that are communicatively connected, through one or more wireless networks, with a centralized system configured to store, train, and/or implement the optimization module and/or one or more machine learning models thereof. By way of example, the centralized system may include a connected cloud platform including a distributed serverless cloud environment, a dedicated cloud server environment, and/or the like. In some examples, the centralized system may train the machine learning model and provide the trained model to the control system. In such a case, the control system may locally implement the machine learning model to locally generate one or more optimized energy outputs. In addition, or alternatively, the control system may provide one or more optimization inputs to the centralized system and receive one or more energy-based outputs from the centralized system based, at least in part, on the optimization inputs.

In certain embodiments, the control system and/or centralized system may generate, using the optimization module, one or more energy-based outputs based, at least in part, on a plurality of optimization inputs received from a plurality of sources of information. The plurality of sources of information, for example, may include one or more weather forecasting services, global time services, heat forecasting services, water usage tracking services, adjacent AWG systems, and/or the like. In this manner, the control system may intelligently control an AWG system in real time by accounting for a plurality of inputs from across a diverse array of information sources. Using some of the techniques of the present disclosure, the control system may leverage artificial intelligence to continuously learn and adapt to different circumstances over time.

### Atmospheric Water Resources

The atmosphere contains approximately 3100 cubic miles (mi³) or 12,900 cubic kilometers (km³) of water. This quantity is roughly equivalent to all of the water held by the Great Lakes by volume. Water vapor as a natural resource is constantly replenished by the natural closed loop hydrologic cycle, thereby providing a nearly limitless supply of water that may be extracted from air without adverse environmental impact.

### Atmospheric Water Generation

The process of AWG comprises systems and methods for extracting water vapor from atmospheric source air at least in part by condensing the water vapor and capturing the condensed, liquid water (e.g., by absorbing the liquid water into a desiccant solution). Certain embodiments may be combined with carbon dioxide capture systems as discussed herein. Certain embodiments comprise steps for preconditioning and/or compressing raw source air (e.g., air at atmospheric conditions) to ease the water extraction process, and/or condensing the water vapor trapped within the raw source air (e.g., by increasing the humidity of at least a portion of the raw source air) to maximize the amount of water vapor that may be extracted from a given unit volume of source air. As discussed herein, processed source air is compressed, consolidated, and/or otherwise manipulated through one or more processes, for example, to ease the water extraction process.

Ultimately, various embodiments of the AWG process comprise condensation mechanisms through which source air (raw source air and/or processed source air, as discussed herein) may be directed over one or more condensation surfaces each having a surface temperature below the dew point of the source air. As the source air flows over and/or around the condensation surfaces, the temperature of the source air adjacent the condensation surfaces drops (e.g., through convective heat transfer), and water vapor within the source air condenses on the condensation surfaces, and the condensed, liquid water flows into a storage vessel (e.g., a capture tank) and/or to one or more related modules (e.g., a greenhouse module) for immediate use.

### Air Preconditioning

As noted above, raw source air may be preconditioned to ease the water extraction process utilized to ultimately condense water vapor into usable liquid water. In certain embodiments, the preconditioning process may comprise steps for compressing the air to increase the vapor pressure of the air (thereby biasing a greater volume of water to the liquid state rather than the vapor state) and/or to decrease the temperature of the source air to a temperature nearer to the dew point. In certain embodiments, an air preconditioning system described herein may be utilized before and/or after a humidity increasing system, such as a desiccant-based humidity increasing system as described herein. Moreover, the air preconditioning system may be utilized before and/or after a carbon dioxide capture system as discussed herein.

As just one example, the air preconditioning process may comprise a series of compressors/pumps, venturi valves, vortex valves, manifolds, and/or the like collectively configured to decrease the temperature of the source air closer to the air dew point and/or to increase the pressure of the air prior to removing water vapor from the air (e.g., through condensation or absorption by a desiccant). For example, raw source air may be drawn into the air preconditioning system via a vacuum pressure formed at an inlet via a compressor 101 (e.g., a turbine/blower compressor having a plurality of stator or variable pitch turbine blades controllable via servo motors) and/or a centrifugal fan configured to increase the raw air pressure entering the air preconditioning system. In certain embodiments, the compressor and/or centrifugal fan may be rotated via one or more electrical motors (which may receive electrical input power from one or more power systems in communication with the air preconditioning system) mechanically connected with the compressor and/or centrifugal fan via a gear transmission, a belt drive, a chain drive, and/or the like.

In embodiments comprising a centrifugal fan, particulates, dust, and other heavy air contaminants are spun to the outermost edge of the centrifugal fan and are removed from the air stream and ejected from the air preconditioning system.

In certain embodiments, the filtered air may be directed into a carbon dioxide capture column, where it is passed over a fixed absorption bed configured to absorb carbon dioxide from the air, as discussed in greater detail herein. The carbon dioxide may be separated and directed away from the air stream via a compressor.

In certain embodiments, the filtered air (with a reduced carbon dioxide content) may be directed further through the air preconditioning system into a primary manifold, where the air is divided at a selected ratio by a variable plenum/valve. From the primary manifold, a first air stream continues along a bulk air stream, and a second air stream is directed to a vortex tube manifold as discussed herein.

The bulk air stream may proceed through one or more venturi valves each configured to decrease the pressure and temperature of the bulk air stream (the volume and quantity of air remains constant across each venturi valve while the pressure decreases, thereby causing the temperature of the air stream to decrease proportionally to the temperature) and/or through a precooler (e.g., a heat exchanger with a cooling fluid passing therethrough). After proceeding through the one or more venturi valves and/or the precooler, the bulk air stream may proceed to a temperature measurement portion, where the temperatures (e.g., dry bulb and wet bulb temperatures) of the bulk air stream are measured by one or more temperature measurement devices (e.g., thermometers) to determine the dew point of the bulk air stream. Outputs from the temperature measurement devices may be utilized by a controller to mix the bulk air stream with at least a portion of the vortex-chilled air stream to lower the temperature of the bulk air closer to the air dew point. For example, the controller may be in electronic communication with an electromechanical mixing valve that may be selectably opened or closed to vary the amount of vortex-chilled air that is introduced into the bulk air stream. Based, at least in part, on the determined dry-bulb and/or wet-bulb temperatures (as monitored by the controller), the controller may transmit a signal to a motor to move the electromechanical valve to a desired position to obtain a desired mixture of vortex-chilled air with the bulk air stream.

The vortex-chilled air begins as the second stream of air exiting the primary manifold. The second stream of air exits the primary manifold, and proceeds to a vortex tube manifold where it is pressurized (e.g., via a compressor) to a sufficient pressure to achieve a drop in temperature of the air travelling through one or more vortex tubes 106 of between approximately 70-150 degrees Fahrenheit. For example, the air may be pressurized to at least approximately 70-120 PSI prior to being directed into the one or more vortex tubes. Each vortex tube comprises an entry port directing the stream of air tangentially into an internal spin chamber. As air enters the spin chamber, the air takes on an angular momentum, causing dense, warm air to migrate towards an exterior perimeter of the spin chamber and out of an exhaust valve. In certain embodiments, the warm air may be utilized to heat a carbon dioxide capture column. The remaining, vortex-chilled air migrates toward the center of the spin chamber and out of a vortex outlet. As mentioned above, the vortex-chilled air may be mixed with the bulk air stream to lower the temperature of the bulk air stream closer to the dew point. As yet another alternative, the vortex chilled air may be utilized to chill the precooler through which the bulk air passes.

In certain embodiments, the mixed and chilled bulk air stream is then directed into a condensation chamber, where the water vapor within the air is condensed into liquid water. As just one example, the bulk air stream may be directed over a series of condensation surfaces (e.g., chilled plates, screens, tubes, and/or the like configured to lower the localized temperature of the air at the condensation surfaces below the air dew point, thereby causing the water vapor to condense on the condensation surfaces. The condensed water may then be routed from the condensation surfaces into a retention chamber for collection and later use. However, it should be understood that any of a variety of condensation mechanisms may be used. For example, as discussed herein, one or more desiccant-based condensation mechanisms may be utilized to more effectively remove water vapor from the bulk air stream. Moreover, in certain embodiments the air-preconditioning system may be omitted, and raw air may be filtered and/or directed immediately into a condensation chamber. Such embodiments may have a lower input power requirement, and therefore the amount of power required for water generation may be decreased.

It should also be understood that certain preconditioning system embodiments comprise one or more filters (e.g., fabric-based air filters, non-woven based air filters, and/or the like), one or more refrigerant systems (e.g., warm air is passed through a heat-exchanger to lower the temperature of the air closer to the dew point), and/or the like in place of or in addition to the vortex and venturi valve mechanisms discussed herein.

### Desiccant-Usage within an AWG System

As mentioned above, certain embodiments comprise one or more subsystems configured to increase the humidity of a portion of the source air to increase the amount of water that may be extracted from the source air. Specifically, water vapor may be extracted from a first, large quantity of source air, and may be reintroduced into a second, smaller quantity of source air, thereby consolidating the water vapor of the source air and increasing the humidity of the second quantity of source air before the water vapor in the second quantity of source air is condensed into liquid water.

AWG systems as discussed herein comprise at least one air scrubber comprising a column for contacting atmospheric air (e.g., after increasing the humidity of the air) with a desiccant. In certain embodiments, the desiccant solution may be a fluid, a gel, and/or the like within the typical operating temperature ranges discussed herein. The desiccant may be selected from any of a variety of ionic solutions capable of absorbing water, such as lithium-chloride (LiCl), lithium-bromide (LiBr), Calcium Chloride (CaCl), triethylene glycol, and/or the like. Other, unlisted chemical compounds having hygroscopic characteristics may be provided for use as the desiccant solution in certain embodiments. The hygroscopic fluid may also comprise surfactants and/or nanofluids. In certain embodiments, the desiccant solution may comprise a mixture of a plurality of ionic solutions, such as a mixture of LiCl solution and CaCl solution, The desiccant may be dissolved in water to provide a highly concentrated desiccant solution that may be pumped (e.g., via liquid pumps) through the at least one desiccant column. Other materials, including gels, aerogels, desiccant granules flowable subject to granular flow principles, and/or the like may be utilized in place of desiccant solutions in certain embodiments.

Moreover, the amount of water vapor that may be absorbed by the desiccant (and/or released by the desiccant) is dependent on the vapor pressure and temperature of a closed system including the desiccant. Accordingly, various embodiments are configured to absorb water from the air into the desiccant while the vapor pressure in the closed system is high and the temperature is low, and those same embodiments are configured to extract water from the desiccant while the vapor pressure is low, and the temperature is high.

### Water Absorption from Atmospheric Air

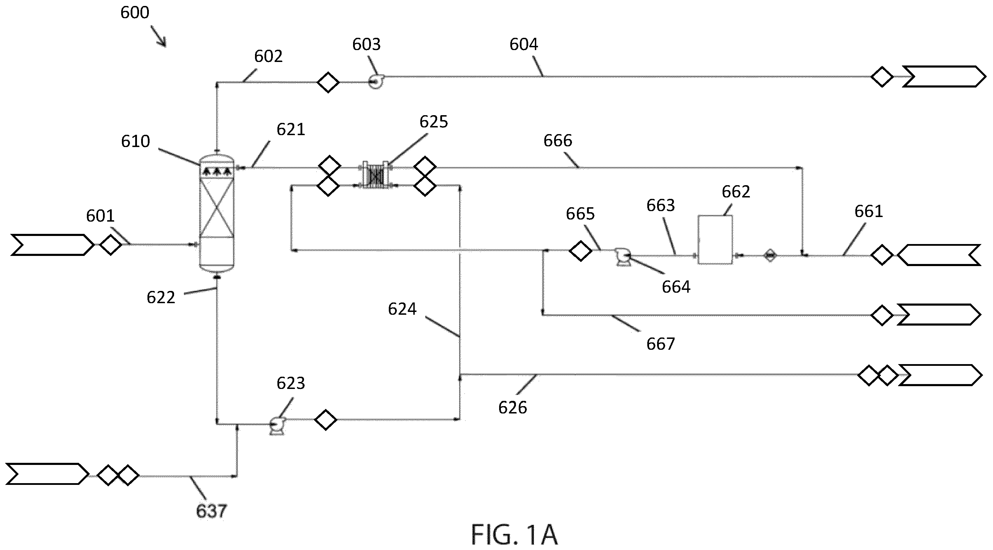

Water may be extracted from air via one or more absorption modules. AWG systems (an example of which is shown as system 600 shown in FIGS. 1A-1B) may incorporate a single absorption module or multiple absorption modules. The absorption modules are connected with additional modules within the AWG system, including the water extraction module(s) discussed in greater detail below, such that the desiccant may flow between the water absorption module and the additional modules of the AWG system. Flow paths to and from the absorption modules within the overall AWG system may be configurable (e.g., configurable via valves between open and closed configurations), such that the absorption modules may operate as closed-modules in a batch-operating mode (with the desiccant flowing only within the absorption module and/or between multiple absorption modules) prior to passing the desiccant to water extraction modules. In other embodiments (e.g., when valves are in an open configuration, or in embodiments without valves), the desiccant flows freely between the absorption module(s) and the water extraction module(s), such as in a continuous flow operating configuration.

Moreover, as mentioned, air entering the absorption module(s) (e.g., via air flow path 601 entering absorber 610 and exiting absorber as dry air via flow path 602-604 shown in FIG. 1A) may flow from a pre-conditioning module configured for increasing the humidity of atmospheric air prior to extracting water from the atmospheric air within the absorber 610. In other embodiments, air may flow directly into the absorption module(s) from the surrounding atmosphere external to the AWG system.

The absorption module according to certain embodiments comprises an absorber 610 configured to contact ambient/atmospheric air (e.g., after preconditioning) with a desiccant (flowing through the absorber 610 along flow paths 621-622) so as to absorb water from the atmospheric air into the desiccant. The absorber 610 may be embodied as a vessel in which the desiccant flows between an inlet (via flow path 621) and an outlet (via flow path 622), and the ambient/atmospheric air flows between an air inlet (flow path 601) and an air outlet (flow path 602-604, inclusive of blower 603). Within the vessel, the ambient air contacts the desiccant to enable mass transfer of water vapor from the ambient air into the desiccant. In certain embodiments, one or more baffles, flow interrupters, packings (e.g., structured packing or random packing) may be placed within the absorber so as to increase the surface area of the desiccant and/or to increase the contact time between the ambient air and the desiccant.

In certain embodiments the absorber 610 is configured in a counter flow configuration where atmospheric air enters the absorber 610 proximate to the bottom of the absorber 610. Dry, atmospheric air then exits the absorber 610 proximate the top of the absorber 610 via a specific flow path (with a pump/blower 603 utilized to move air through the absorber 610). Rich desiccant (e.g., a desiccant fluid) enters proximate the top of the absorber 610 via an inlet flow path 621 and flows down through the interior of the absorber 610 due to gravity. Water is absorbed from the ambient air into the desiccant, such that dilute desiccant exits the absorber proximate to the bottom of the absorber 610 along an outlet flow path 622. In certain embodiments, flow modifiers, such as barriers, mesh, packing components, and/or turns in exit piping from the absorber 610 may be used to reduce carry over of desiccant in the air exit of the absorber 610. In certain embodiments the flow modifiers may be positioned in the interior of the absorber 610 proximate to the top of the absorber 610 (e.g., at a mouth of an exhaust port for dry ambient air to exit the absorber via an exhaust air flow path).

In certain embodiments, the absorber 610 operates in a crossflow configuration where air enters the absorber from one side of the absorber 610 and traverses (e.g., at least substantially horizontally) to the other side. Rich desiccant (e.g., desiccant fluid) enters the top of the absorber 610, absorbs water from the ambient air as it flows to a low point in the absorber 610 where dilute desiccant exits proximate the bottom. In this fashion, the air flow is at least substantially perpendicular to the flow of desiccant within the absorber 610. In this configuration, the air inlet and air outlet are approximately at the same height on the absorber 610.

In certain configurations, the absorber 610 is operated in the cross-counter flow configuration where air enters the absorber 610 from one the side of the absorber 610 and traverses to the other side. Rich desiccant (e.g., desiccant fluid) enters proximate the top of the absorber 610 and absorbs water from the ambient air as it flows to a low point in the absorber 610 where dilute desiccant exits proximate the bottom of the absorber 610. In this configuration, the air inlet and air outlet are offset in level from each other. In this configuration, the air inlet may be at the side of the absorber 610 at a location proximate to the top of the absorber 610 and the air outlet is on the side of the absorber 610 proximate to the bottom. In another orientation of this configuration, the air inlet is positioned on the side of the absorber 610 proximate to the bottom of the absorber 610 and the air outlet is positioned on the opposite side of the absorber 610 proximate to the top of the absorber 610. The air travels along a path extending at an angle through the absorber 610 from the top of the absorber 610 to the bottom or the bottom of the absorber 610 to the top.

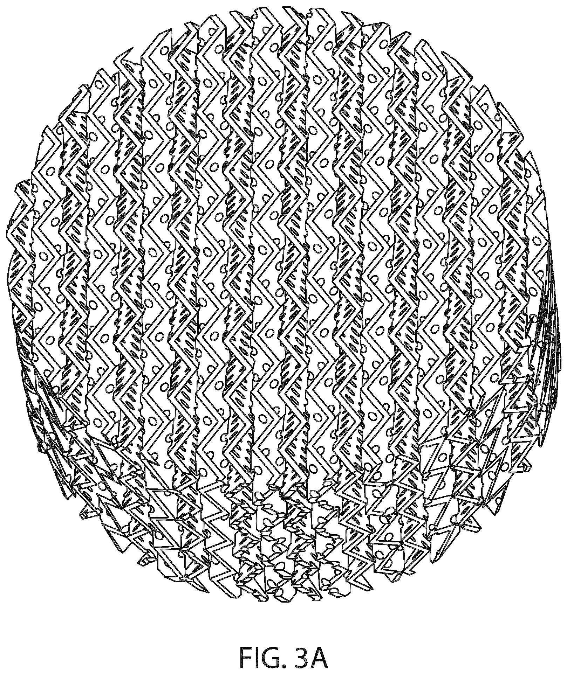

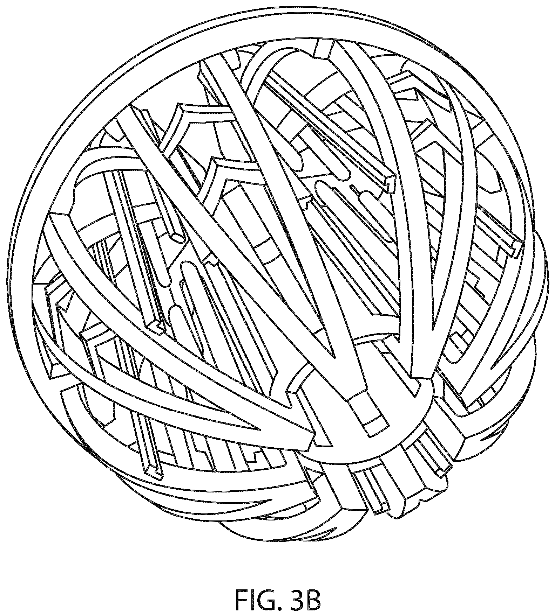

In certain embodiments, the interior of the absorber 610 comprises a plurality of packing components around which the rich desiccant flows as it absorbs water extracted from the humid ambient air. The packing components are provided to increase the surface area of the rich desiccant flowing within the absorber 610 and also to provide a highly tortuous flow path for ambient air flowing through the absorber 610 such that the air has a turbulent flow through the interior of the absorber 610. The absorber 610 may be embodied as a counter flow vessel described above, with the rich desiccant (e.g., desiccant fluid) entering the absorber 610 at a desiccant vessel inlet located at or near the top of the absorber 610, and the ambient air inlet is located at the bottom of the absorber 610. The ambient air flows upwards to a dry air exhaust located at or near the top of the absorber 610, and the desiccant fluid flows downward, across the packing components, to a dilute desiccant outlet of the absorber 610. As examples, the packing components may comprise individual blocks, balls, trays, baffles and/or any other shape defining a plurality of baffles, slits, holes, meshes, and/or other flow modifying components that may be positioned within the absorber 610 to collectively define a highly tortuous path for the ambient air and the desiccant fluid to pass through the absorber 610. The packing components may comprise (be formed of) a material that is not reactive to the desiccant fluid. Example packing components are illustrated in FIGS. 3A-3B. In certain embodiments, a plurality of packing components (such as the unstructured packing component shown in FIG. 3B) may be positioned within the absorber 610 without physically connecting the packing components relative to one another. In other embodiments, a single packing component (such as the structured packing example of FIG. 3A) sized and shaped specifically for the interior of the absorber 610 may be provided and positioned within the absorber 610.

The packing components of certain embodiments may be placed in a structured configuration to define channels set at different angles to each other with or without holes that collectively define structured flow paths for the ambient air and the desiccant fluid flowing through the absorber 610. To provide a structured packing configuration, the packing components are placed in the absorber 610 in an ordered stacked manner. Packing components may also be positioned randomly in which a plurality of geometrically shaped components is randomly placed in the absorber 610 to increase surface area. Although discussed as a packing-based absorber, it should be understood that the desiccant fluid may be passed through the absorber 610 via other configurations, such as by atomization of a liquid desiccant fluid, by spraying the desiccant fluid within the absorber and/or the like).

In use of an overall AWG system, ambient air (at an ambient temperature and an ambient humidity level) is directed into absorber 610 (although not shown, a blower may be implemented at the air intake to the absorber 610 to increase the volumetric flowrate of ambient air entering the absorber 610). In the absorber 610, the ambient air contacts a rich (concentrated) desiccant (e.g., desiccant fluid) provided to the absorber 610 at a low temperature, to increase the vapor pressure within the absorber to encourage water vapor within the humid ambient air to condense and to be absorbed by the desiccant fluid while the humid air contacts the rich desiccant. While the ambient air and the desiccant fluid flow through the absorber 610, humidity within the air condenses and/or is otherwise absorbed into the desiccant fluid to dilute the desiccant fluid and to dry the air. The dry air then exits the absorber back to the atmosphere, as indicated at 602. As shown, a blower 603 may be incorporated at an ambient air exhaust of the absorber 610 to increase the volumetric flowrate of air passing through the absorber 610. The blower 603 may be provided in addition to, or as an alternative to, the above-mentioned blower placed at the ambient air intake of the absorber 610. Moreover, once the desiccant fluid has passed through the absorber 610, a diluted, but still cool, desiccant fluid exits the absorber 610 as indicated at 622.

According to certain embodiments, dilute desiccant (e.g., a desiccant fluid) exits the absorber 610 to a pump 623. In certain operation, the absorber module may be operated in a batch configuration where a series of valves may be configured to isolate the absorber module from other portions of the AWG system, and to thereby recirculate the dilute desiccant along a recirculation flow path (while additional rich desiccant fluid is prevented from entering the closed loop via flow path 637 while appropriate valves remain closed) and through a pre-absorber heat exchanger 625 (e.g., a shell-and-tube heat exchanger, a plate heat exchanger, and/or the like) to cool the dilute desiccant (the opposite side of the heat exchanger is cooled water that has been collected from the overall system, as discussed in greater detail herein) before it is passed back into the top of the absorber 610 as indicated at 621. In this way, the amount of water absorbed into the desiccant fluid may be increased (thereby increasing the level of dilution of the desiccant) before the desiccant is directed to evaporation portions of the overall system.

In certain embodiments, the absorption module comprises a pre-absorber heat exchanger 625 that is cooled through the use of a chiller using a cooling media (e.g., water, glycol, and/or the like) that cools the rich desiccant flowing into the pre-absorber heat exchanger via flow path 624 (e.g., the cooling media is separated from the desiccant, such as on opposite sides of a heat exchanger) before the rich desiccant enters the absorber 610.

In certain operation, the absorber module may be operated in a continuous configuration where valves are configured to recirculate a certain amount of dilute desiccant fluid along the recirculation flow path and a certain amount of dilute desiccant fluid flows toward the water extraction module through a separate flow path (flow path 626) connecting the absorption module and the water extraction module. In this configuration, a certain amount of dilute desiccant fluid flows along the recirculation flow path through the pre-absorber heat exchanger 625 (e.g., a shell-and-tube heat exchanger, a plate heat exchanger, and/or the like) to cool the dilute desiccant fluid (the opposite side of the heat exchanger 625 is cooled using water that has been collected from the overall system) before it is passed back into the top of the absorber 610 as indicated at 621. Dilute desiccant fluid simultaneously traverses along a separate flow path 626 to the water extraction module. The cooling fluid passes through flow paths 661-667, which encompasses a recirculation loop of fluid, as well as a cooling system 662 and pump 664 that ensures adequate flow of fluid through the pre-absorber heat exchanger 625. Portions of the fluid return to a fluid store via flow path 667.

In certain embodiments, the absorber 610 is configured such that the rich desiccant is not cooled in a heat exchanger. In this embodiment, cooling of the desiccant fluid may be provided via thermal conductive heat exchange with ambient air through the conductive pipes along certain flow paths leading to an intake of the absorber. Fluid cooling may be provided in the absorber 610 as sensible heat is exchanged with the atmospheric air, provided that the air temperature is lower than the entering desiccant fluid temperature.

As just one example, rich desiccant fluid moving toward the absorber 610 may be directed through a series of geothermal tubes having heat transfer properties with surrounding ground beneath the AWG system. The rich desiccant fluid may directly pass through the series of geothermal tubes, or the rich desiccant fluid may pass through a dual-fluid heat exchanger opposite a cooling fluid that is maintained at a desired low temperature via geothermal cooling. As yet another example, the desiccant may pass through a heat exchanger (e.g., a shell-and-tube heat exchanger) to cool the desiccant fluid. The heat exchanger may be cooled via a cooling solution that passes through a refrigeration circuit and/or other fluid chiller to absorb heat from the desiccant fluid before the desiccant fluid enters the absorber 610.

As yet another example, the single-stage water consolidation system may be positioned proximate a high-pressure gas well, such as proximate a natural gas well, an oil well (where natural gas is extracted simultaneously with oil), and/or the like. The high pressure gas may be directed through one or more expansion valves to regulate and/or decrease the pressure of the incoming gas, which, through the Joules-Thompson effect, experiences a rapid temperature decrease (following the gas law formula, the pressure of the gas rapidly decreases across the valve while the volume and amount of gas remains substantially constant, thereby causing a proportional rapid temperature decrease across the expansion valve). The expanded and super-cooled gas may be passed through a heat exchanger opposite the rich desiccant fluid, thereby absorbing heat from the rich desiccant fluid and decreasing the temperature of the desiccant fluid prior to entry into the absorber 610. The expanded gas may then be directed away from the AWG system, where it may be collected for future use, flared off, utilized for power generation (e.g., via a steam turbine), and/or utilized to heat the desiccant fluid entering the water extraction module, as discussed herein.

In certain embodiments the absorber 610 is configured such that the diluted desiccant fluid exits the absorber 610 and is sent to the water extraction module without a recirculation path. Rich desiccant fluid returning from the water extraction module may or may not be cooled with a heat exchanger and/or chiller and/or geothermal cooling prior to entering the absorber 610. For example, dilute desiccant that exits the absorber 610 is pumped along a flow path extending between the absorption module and the water extraction module when appropriate valves are closed to prevent the dilute desiccant from recirculating into the absorber 610 as discussed above.

In certain embodiments, the absorber 610 may be embodied as a membrane-separated absorber, having a desiccant flow path on a first side of a porous membrane, and an air flow path on an opposite, second side of the porous membrane. Separating the air flow path from the desiccant solution flow path may impede undesirable mass flow of the desiccant salt (e.g., aqueous desiccant salt) itself into the air flow path and ultimately out of the AWG system. Water may be absorbed by the desiccant from the air based, at least in part, on osmotic water flow through the membrane from the air to the desiccant solution. Water vapor may condense on the second side of the membrane, travel through the membrane pores through capillary action, and be absorbed by the high-salt content concentrated desiccant solution. In certain embodiments, the membrane is embodied as a porous membrane, having pores of adequate size (e.g., average pore diameter, maximum pore diameter, and/or the like) to enable water molecules to pass through the membrane while the desiccant salt is prevented from passing through the membrane. As examples, the porous membrane may be a non-woven material, such as polytetrafluorethylene (PTFE), expanded polytetrafluorethylene (ePTFE), polypropylene (PP), polyvinylidene fluoride (PVDF), and/or the like. Other materials, including nylons and/or other synthetic materials may additionally be used in certain embodiments. In various embodiments, synthetic and/or natural materials may be utilized. The porous membrane may be at least partially woven in certain embodiments. In certain embodiments, the membrane may be organic, inorganic, polymeric, mesoporous, ceramic, and/or the like. In certain embodiments, the membrane may comprise metal organic frameworks, carbon nanotubes and/or a combination thereof. The membrane may be hydrophilic and/or hydrophobic or may be treated (e.g., with a coating) to allow the membrane to be hydrophilic and/or hydrophobic. As example membrane geometries, the membrane may be spiral wound, flat plate and frame style, or tubular. As the desiccant solution and the water flow past opposite sides of the membrane, water molecules migrate from the desiccant solution through the membrane (via capillary action), to the permeate water flow (e.g., water vapor and/or liquid water). In certain embodiments, the membrane may be supported within a frame via spacers, such as a lattice, a grid, and/or the like to provide mechanical support for the membrane to maintain a desired orientation of the membrane within the housing.

Various embodiments of the absorption module comprise a multi-stage absorber configuration, including a plurality of absorbers arranged in series (such that the desiccant flows from a first absorber, through a second absorber, and sequentially through additional absorbers within the multi-stage absorber configuration. Alternatively, the multi-stage absorber configuration encompasses a plurality of absorbers arranged in parallel, such that the desiccant is split to flow through the plurality of absorbers in parallel.

Moreover, the plurality of absorbers may be arranged in series within the air flow path, such that source air may be pulled from the environment and passed through the plurality of absorbers in series prior to being exhausted back to the environment as dry air. For example, the source air may be first passed through the low concentration absorber to absorb a first quantity of water from the air, then may be passed through the high concentration absorber to absorb a second quantity of water from the air. Because the initial absorption requires less energy (and does not require a low vapor pressure between the air and the liquid desiccant), the initial absorption using the lower concentration desiccant fluid enables absorption of a first quantity of water from the air. After the initial, low energy requirement absorption process is completed, the air (which still contains water vapor) is passed through the second absorber having a higher concentration desiccant fluid, such that a second quantity of water is absorbed from the air. The now dry (e.g., low humidity) air may then be exhausted from the system to the environment.

On the desiccant side, once the dilute desiccant exits the low concentration absorber, the desiccant fluid passes to a water extraction module as discussed herein to extract water therefrom (and to consequently reconcentrate the desiccant).

In certain embodiments, each absorber may be in fluid communication with a corresponding water extraction module, such that each absorber is associated with a separate and independent desiccant flow path loop. For example, a first quantity of desiccant fluid may flow between a first absorber and a first water extraction module, and a second desiccant fluid may flow between a second absorber and a second water extraction module, and the first quantity of desiccant fluid does not mix with the second quantity of desiccant fluid. In certain embodiments, the first quantity of desiccant fluid may comprise a first desiccant (e.g., LiCl) and the second quantity of desiccant fluid may comprise a second desiccant (e.g., CaCl).

Moreover, in embodiments comprising a plurality of independent desiccant flows, each desiccant flow may have a different concentration range. For example, a first desiccant flow (e.g., corresponding to a first absorber passed through by source air) may have a first concentration range measured between a high concentration value at an exit of the water extraction module and a low concentration value at an exit of the absorber; and a second desiccant flow may have a second concentration range. As the source air is directed through the absorption columns in series, the air may be directed through a low concentration range absorption column first and may be directed through a high concentration range absorption column second.

### Membrane-Based Water Extraction from a Desiccant

The water extraction module is provided to remove water from a diluted desiccant (e.g., from a diluted desiccant fluid) for storage and use as potable or other clean liquid water uses. The water extraction module comprises one or more membrane-based water extraction devices (e.g., connected in series or in parallel) and is connected to the absorption module via various flow paths to enable desiccant (e.g., diluted desiccant and rich desiccant) to flow between the absorption module and the water extraction module. The membrane-based water extraction device (also referred to as a fluid separation device) also acts to concentrate the desiccant solution into a concentrated desiccant retentate solution which may be reprocessed through the AWG system.

In some embodiments, the water extraction module may include at least one membrane-based water extraction device 633 defining two flow paths separated by a permeable membrane 633a. On a first side of the permeable membrane 633a, the desiccant flows along a desiccant flow path (between flow path 632 and flow path 634) and on the opposite, second side of the permeable membrane, permeated fluid (e.g., water vapor) is captured then transferred (within portion 633c, located within the water extraction device between flow path 650 and flow path 651). Both the desiccant (on the first side 633b of the permeable membrane 633a) and the captured permeate fluid (on the second side 633c of the permeable membrane 633a) are in contact with opposite sides of the permeable membrane 633a while flowing past the permeable membrane 633a. The membrane 633a may thereby separate the desiccant flow path from the captured permeate (water vapor) flow path, which comprises water vapor collected during the water collection/fluid separation process (e.g., water vapor that migrates through the porous membrane 633a) and condenses into a liquid permeate water flow (e.g., downstream of the membrane-based water extraction device). In certain embodiments, mass transfer of water vapor across the membrane 633a may be driven by raising the vapor pressure of the desiccant. This may be accomplished by heating of the desiccant prior to contact with the membrane 633a (on the desiccant side 633b of the membrane). Lowering the pressure (e.g., by using a vacuum mechanism) to reduce the pressure on the permeate side 633c of the membrane 633a, also causes mass transfer of water vapor across the membrane. As the desiccant flows past the porous membrane 633a (on the first, desiccant side 633b of the membrane), the water in the desiccant begins permeation across the membrane 633a in the vapor state and exits the membrane 633a (on the second side) in the vapor state. The water vapor then condenses as it cools and flows along the water flow path (e.g., at least partially by utilizing a heat exchanger (e.g., condenser 627) and/or contacting it with a colder fluid (e.g., condensed water)).

In certain embodiments, the desiccant side 633b may be heated by a heating fluid (e.g., heating oil, steam, glycol, and/or the like) that is separated from the desiccant flow path within the membrane-based water extraction device via a heat-conductive layer (e.g., a heat-conductive, non-porous film, a metal sheet, and/or the like). In certain embodiments, the desiccant side 633b may be embodied as a shell-and-tube heat exchanger, with the heating fluid flowing through tubes and the desiccant flowing through the shell, with certain wall(s) of the shell being embodied as the porous membrane 633a. In certain embodiments, the heating fluid may be a product of the AWG system, thereby utilizing sensible heat transfer to heat the desiccant fluid to encourage water vapor migration across the membrane. In other embodiments, the heating fluid may be a product (e.g., a final product, a waste product, or an intermediate product) of a spatially proximate process, such as mining, gas extraction, power production, and/or the like.

As discussed in greater detail herein, the permeate side 633c may similarly comprise a heat-exchanger configuration to lower the temperature of the permeate fluid to encourage condensation thereof. For example, a cooling fluid (e.g., liquid water extracted from a liquid water storage tank 655, a refrigerant (e.g., glycol), and/or the like) may be separated from the permeate flow path by a heat-conductive layer (e.g., a heat-conductive, non-porous film, a metal sheet, and/or the like). The cooling fluid cools the heat-conductive layer, thereby providing a surface within the permeate fluid flow on which water vapor may condense. In certain embodiments, the permeate side 633c may be embodied as a shell-and-tube heat exchanger, with the cooling fluid flowing through tubes and the permeate fluid flowing through the shell, with certain wall(s) of the shell being embodied as the porous membrane 633a. In such embodiments, the outer surfaces of the tubes are provided as condensation surfaces for the water vapor. In certain embodiments, the cooling fluid may be a product of the AWG system (e.g., liquid water), thereby utilizing sensible heat transfer to cool the permeate to encourage water vapor migration across the membrane and to encourage condensation of the water vapor.

The membrane 633a may comprise a hydrophobic porous membrane, such as non-woven membrane having a small pore size. As just one example, the membrane may comprise PTFE, ePTFE, PP, PVDF, and/or the like, that is hydrophobic by design. In certain embodiments, the membrane may be organic, inorganic, polymeric, mesoporous, ceramic, and/or the like. In certain embodiments, the membrane may comprise metal organic frameworks, carbon nanotubes and/or a combination thereof, such as by stacking layers of material. The membrane may be hydrophilic or hydrophobic or may be treated (e.g., with a coating) to allow the membrane to be hydrophilic and/or hydrophobic. The use of a hydrophobic material (or a material having a hydrophobic coating) encourages water vapor to selectively pass through the membrane to be retained on the permeate water side 633c of the membrane. Adhering a layer of hydrophobic material to the membrane on the desiccant side 633b causes only volatile vapors to pass through and fluids in the liquid state are retained on the desiccant side 633b of the membrane. As examples of membrane geometries, the membrane may be spiral wound, flat plate and frame style, or a hollow tube. As the desiccant solution flows across the desiccant side 633b of the membrane, water molecules migrate from the desiccant solution through the membrane (via capillary action) in the form of vapor, to the permeated water side 633c, leaving a highly concentrated desiccant solution on the desiccant side 633b of the membrane 633a.

The membrane-based water extraction device 633 is embodied as a housing having a desiccant inlet and a desiccant outlet on the desiccant side 633b of the membrane 633a, and a permeate inlet and a permeate outlet on the permeate side 633c of the membrane 633a. In other example embodiments, the membrane-based water extraction device 633 may utilize gravity to remove permeate fluid from the membrane-based water extraction device 633, and in such embodiments, the permeate flow path need not include an inlet (such that gravity alone is sufficient to move the permeate fluid through an outlet of the device). For example, as the desiccant fluid flows from an inlet to an outlet of the membrane-based water extraction device, water vapor migrates through the membrane into vapor form on a permeate side of the membrane. The permeate side of the membrane may be cooled (e.g., using a cooling fluid separated from the permeate side of the membrane by a heat-conductive film), and water may condense within the permeate side of the membrane-based water extraction device and may fall (under the force of gravity) through an outlet port located on a bottom end of the permeate-side of the membrane.

The desiccant flow path extends between the desiccant inlet and the desiccant outlet. The permeate (water) flow path extends between the permeate inlet and the permeate outlet. In certain embodiments, the permeate outlet may be located below (and on an opposite end of the membrane-based water extraction device) the permeate inlet so as to utilize the force of gravity to encourage flow of permeate out of the membrane-based water extraction device. As mentioned above, each of the desiccant flow path and the permeate flow path interface the porous membrane 633a on opposite sides thereof. By separating the desiccant fluid from the permeate flow, the membrane 633a impedes mass transfer of dissolved solids from the desiccant into the resulting permeate flow, thereby preserving the desiccant for continuous usage and preserving the purity of the captured water. Similarly, the membrane impedes migration of a gas (e.g., a sweep gas) on the permeate side of the membrane 633a from permeating into the desiccant flow.

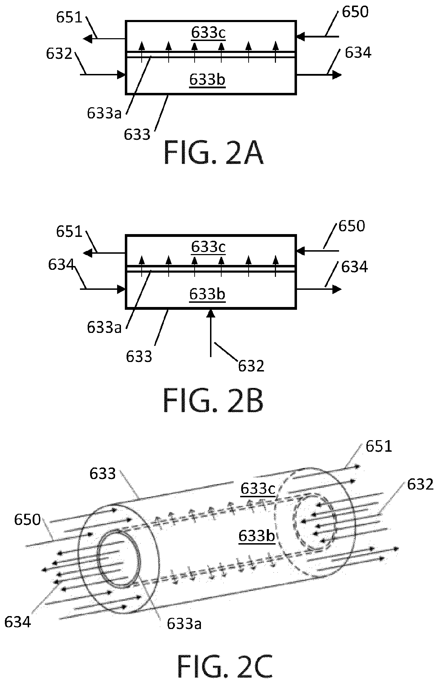

In certain embodiments, the housing defines two parallel flow paths that contact opposite sides of the porous membrane 633a in a counter-cross flow manner as illustrated in FIG. 2A, with the first flow path being the desiccant flow path 633b and the second flow path being the permeate flow path 633c, and the porous membrane 633a is embodied as a planar membrane (e.g., defined within a frame) that separates the desiccant flow path 633b from the permeate flow path 633c. In certain embodiments, the housing is configured to grant access to the porous membrane for maintenance purposes, such as to replace the membrane as needed. In other embodiments, a first flow (e.g., the desiccant flow) may flow in a horizontal direction across the surface of the membrane 633a) and a second flow (e.g., the permeate flow) may flow in a vertical direction across the opposite surface of the membrane, such as with the outlet of the permeate flow being below the inlet of the permeate flow.

In other embodiments, the desiccant flow path may be defined by a desiccant inlet that directs the desiccant toward the membrane (e.g., at a perpendicular angle or an at least substantially perpendicular angle relative to a first side of the membrane), and the desiccant is directed toward an outlet after the desiccant contacts the membrane. This embodiment is a dead end-style flow, where inlet desiccant interfaces the porous membrane in an at least substantially normal (perpendicular) direction of the permeate flow path on the opposite side of the membrane. In this embodiment, the permeate flow path flows parallel to the porous membrane. An example of this configuration is illustrated in FIG. 2B.

In yet other embodiments as illustrated in FIG. 2C, the housing may define a lumen-style flow path, with a first flow path being at least substantially concentric to a second flow path. Walls of the first flow path (separating the first and second flow path) may be at least partially defined by the porous membrane. In certain embodiments, the porous membrane may extend partially around the first flow path. In other embodiments, the porous membrane may extend around an entirety of the first flow path. As just one example, the first, interior flow path may be the desiccant flow path, and the second, outer flow path may be the permeate flow path, such that permeate water migrates through the porous membrane from the interior flow path to the exterior flow path. As another example, the first, interior flow path may be the permeate water flow path and the second, outer flow path may be the desiccant flow path, such that permeate water migrates through the porous membrane from the exterior flow path to the interior flow path.

In the lumen-style flow of the membrane-based water separation device, the permeate flow path and the desiccant flow paths may extend in the same co-current direction or in counter-current (opposite flow) directions. In certain embodiments, the flows may be horizontal, or vertical. In a vertical orientation, the permeate side may flow downward, thereby utilizing gravity to facilitate flow of the water (after condensation) out of the membrane-based water separation device.

To achieve separation of water from the desiccant solution, a difference in chemical potential is introduced. This may be realized in a temperature gradient across the membrane, a pressure gradient across the membrane, and/or a concentration gradient across the membrane between the desiccant flow path 633b, the membrane 633a, and the permeate flow path 633c. A temperature gradient across the membrane may be achieved by heating the desiccant fluid path 633b and/or cooling the permeate liquid water path 633c. The temperature of the desiccant fluid and/or the liquid water may be manipulated through the use of any heating/cooling source to include but is not limited to, heat exchangers, heating elements, waste heat, geothermal heat, solar heating, geothermal cooling, chilling, cooling pond, cooling stream, sweep gas, and/or the like. For example, the membrane-based water extraction device may incorporate a heat-exchanging configuration, such as across a non-porous film on a desiccant side of the membrane (e.g., a heating fluid may heat the desiccant fluid as it flows across a surface of the membrane) and/or a cooling configuration may be incorporated on the permeate side of the membrane (e.g., a cooling fluid separated from the permeate fluid across a non-porous film may cool the permeate fluid). A pressure gradient across the membrane may be achieved by high pressure on the desiccant side of the membrane and/or low pressure on the liquid water side of the membrane. The difference in pressure between the desiccant side of the membrane and permeate side of the membrane is not limited to but may be introduced by the following mechanisms, high pressure pumps, pumps, blowers, compressors, vacuum pumps, venturi vacuum induction mechanisms, and/or the like. Moreover, one or more pumps and/or agitators may be utilized on the desiccant side or the permeate water side to ensure homogeneity of properties of the desiccant and/or liquid water. Ultimately, the difference in pressure and/or temperature may provide a difference in vapor pressure on the two sides of the membrane so as to encourage water vapor to migrate through the membrane from the desiccant side of the membrane to the permeate/water-vapor side of the membrane. Specifically, the vapor pressure on the permeate side of the membrane may be lower than the vapor pressure on the desiccant-side of the membrane (e.g., to utilize an induced vacuum to drive permeation of the water through the membrane).

In certain embodiments, the membrane-based water extraction device is configured to utilize the mechanisms mentioned above to drive chemical potential. In one example incorporating vacuum membrane distillation (VMD), the permeate outlet path 651 is pressurized to a vacuum pressure (e.g., utilizing one or more vacuum pumps located downstream of the membrane-based water extraction device 633 along the permeate flow path, such as at compressor 652) to induce a pressure gradient across the membrane 633. As just one example, a vacuum pump may be located in the permeate water storage tank 655 and/or along flow path 659 of a gas vent from the water storage tank 655. In this embodiment, the absolute pressure on the desiccant side 633b is greater than the absolute pressure on the permeate side 633c. The interior of the membrane-based water extraction device may be analogous to that shown in FIGS. 2A-2C. In certain embodiments, additional components, such as a heating fluid flow and/or a cooling fluid flow (as discussed below) may additionally be incorporated into the VMD configuration of the membrane-based water extraction device to further enhance the efficiency of the water extraction process.

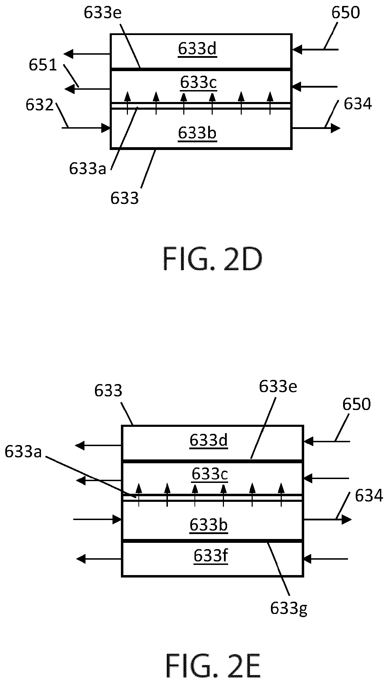

Another example embodiment utilizes air gap membrane distillation (AGMD) processes to drive permeation of water vapor across the membrane 633a to the permeate side 633c of the membrane 633a. Example AGMD configurations are shown in FIGS. 2D-2E, each of which provides for the permeate side of the membrane 633c to carry a cooling fluid along a cooling fluid flow path that is separated from the permeate flow path 633c by a heat-conductive, non-porous film (e.g., cooling water directed from storage tank 655, along flow path 658 to flow path 650 and into the membrane-based water extraction device 633 on the permeate side 633c of the membrane 633a). The cooling fluid flowing along flow path 633d sandwiches an air gap between a non-porous membrane 633e (separating the cooling fluid flow path 633d from the permeate side 633c of the membrane) and porous membrane 633a. The created air gap is formed with non-porous membranes 633e that promote condensing via heat transfer. The air gap serves as a path for condensates once they have separated from the desiccant via porous membrane. The cooling fluid is at a temperature below the heated desiccant fluid, thereby creating a temperature gradient starting from the heated desiccant side of the module 633b and finishing at the cool non-porous membrane holding the cooling fluid. The cool side also causes the transferred vapors to condense into a liquid state. A higher temperature gradient (a greater difference between the heated desiccant fluid and the cooling fluid) creates a greater driving force to separate water molecules within the concentrated desiccant across the porous membrane, thus achieving greater separation performance for the membrane-based water extraction device. As discussed above, the water vapor within the air gap may be directed out of the housing of the membrane-based water extraction device Based, at least in part, on a vacuum created within the air gap, Based, at least in part, on a sweep gas flowing through the air gap, and/or based, at least in part, on gravity that forces condensed water to flow downward and out through an outlet located at a bottom end of the air gap. In certain embodiments, the housing defines three outlets: a desiccant outlet (to flow path 634), a permeate outlet (to flow path 651), and a cooling fluid outlet (to recirculate cooling fluid along a cooling fluid flow path). In certain embodiments, the housing defines at least two inlets (when an inlet is not required for the permeate fluid, such as when gravity is utilized to direct the permeate fluid to exit the air gap) comprising a desiccant inlet (from flow path 632) and a cooling fluid inlet (e.g., from flow path 650). In other embodiments, the housing defines at least 3 inlets (when a permeate flow inlet is required, such as when utilizing a vacuum pressure or a sweep gas to direct the permeate out of the housing), comprising a desiccant fluid inlet (from flow path 632), a permeate fluid inlet (e.g., to enable a gas flow through the permeate side 633c of the membrane), and a cooling fluid inlet (e.g., from flow path 650).

Although illustrated as a flat-plane, non-porous membrane 633d, it should be understood that the permeate side of the membrane 633a may be embodied as a shell-and-tube heat exchanger configuration (with the walls of the tubes embodying the non-porous film 633e and the cooling fluid flowing within the interior of the tubes).

Moreover, certain embodiments may provide an analogous configuration on the desiccant side of the membrane by utilizing a heating fluid separated from the desiccant by a non-porous, heat-conductive film, as shown in FIG. 2E. In such an embodiment, the heating fluid (e.g., a heating oil, steam, a heated refrigerant, and/or the like) passes along a flow path through heating fluid flow 633f, on an opposite side of the non-porous film 633g from the desiccant fluid 633b. The heating fluid transfers heat to the desiccant flowing through desiccant flow 633b, which encourages water vapor transmission across the porous membrane 633a. Particularly when the heating fluid flow 633f configuration is incorporated together with the cooling fluid flow 633d configuration, a large difference in chemical potential is introduced between the desiccant flow 633b and the permeate flow 633c to encourage migration of water across the membrane 633a. As discussed above, the water vapor within the air gap may be directed out of the housing of the membrane-based water extraction device based, at least in part, on a vacuum created within the air gap, based, at least in part, on a sweep gas flowing through the air gap, and/or based, at least in part, on gravity that forces condensed water to flow downward and out through an outlet located at a bottom end of the air gap. In certain embodiments, the housing defines three outlets: a desiccant outlet (to flow path 634), a permeate outlet (to flow path 651), a heating fluid outlet (e.g., to recirculate the heating fluid along a heating fluid flow path) and a cooling fluid outlet (to recirculate cooling fluid along a cooling fluid flow path). In certain embodiments, the housing defines at least three inlets (when an inlet is not required for the permeate fluid, such as when gravity is utilized to direct the permeate fluid to exit the air gap) comprising a desiccant inlet (from flow path 632), a heating fluid inlet, and a cooling fluid inlet (e.g., from flow path 650). In other embodiments, the housing defines at least four inlets (when a permeate flow inlet is required, such as when utilizing a vacuum pressure or a sweep gas to direct the permeate out of the housing), comprising a desiccant fluid inlet (from flow path 632), a permeate fluid inlet (e.g., to enable a gas flow through the permeate side 633c of the membrane), a heating fluid inlet, and a cooling fluid inlet (e.g., from flow path 650).

By separating the permeate flow 633c from the cooling fluid 633d as illustrated in either of FIGS. 2D-2E, the efficiency of permeation of water through the membrane may be increased due to a low vapor-pressure on the permeate side 633c of the membrane. A vacuum pressure, a sweep gas, and/or other flow-encouraging mechanisms may be implemented within the permeate flow 633c to encourage the water vapor on the permeate side 633c of the membrane to exit through the permeate outlet of the membrane-based water extraction device 633 and to be guided to one or more compressors (to incorporate beneficial features of mechanical vapor compression, similar to that described in co-pending U.S. Patent Appl. No. 17/552,173, filed on December 15, 2021. The water vapor exiting the permeate outlet of the membrane-based water extraction device may flow to one or more heat exchangers and/or one or more condensers 627 to condense the water vapor into liquid water before storing the same within storage tank 655.

Other embodiments implement direct contact membrane distillation (DCMD) processes to drive chemical potential across the membrane 633a. In a DCMD configuration, the permeate water side 633c of the membrane 633a carries a cooling fluid (e.g., cooling water) that directly contacts the porous membrane 633a. In such a configuration, water is directed from the storage tank 655 directly to the permeate flow 633c so as to maintain a low temperature on the permeate side 633c of the membrane 633a. Because the cooling fluid is at a lower temperature than the desiccant fluid, the cooling fluid creates a temperature gradient across the membrane 633a, starting from the heated desiccant side 633b and finishing at the direct contacting cooling fluid on the permeate side 633c of the membrane 633a. The cooling fluid may be retrieved from the storage tank 655 and directed into the membrane-based water extraction device 633 along flow paths 658 to 650 to 633c (and out of the membrane-based water extraction device at flow path 651). In certain embodiments, a portion of the water exiting the storage tank 655 along flow path 658 may be directed to external systems for use as liquid water. The permeate side 633c of the membrane 633a is fed by cooling fluid (e.g., liquid water from storage tank 655), which causes water vapors that have permeated through the membrane 633a to condense and transfer the water vapors separated from the concentrated desiccant. A higher temperature gradient (a greater difference between the heated desiccant fluid and the cooling fluid) creates a greater driving force to separate water molecules within the concentrated desiccant across the porous membrane, thus achieving greater separation performance for the membrane-based water extraction device.

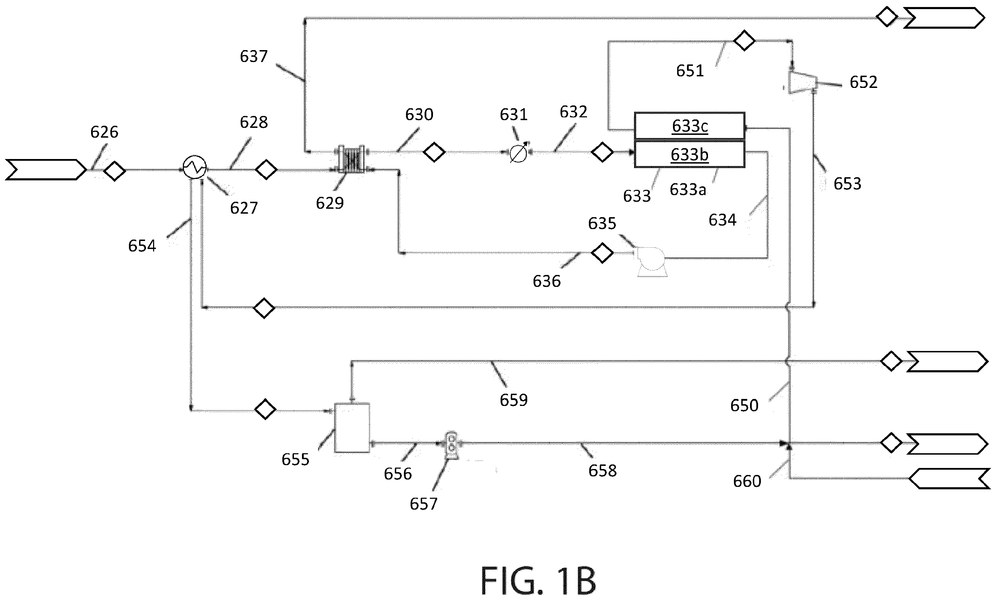

As yet another example, a sweep gas membrane distillation (SGMD) process may be utilized to create a chemical across the membrane 633a. SGMD configurations may be combined with AGMD and/or DCMD to drive further efficiency of such configurations. According to an SGMD configuration, the permeate water side 633c of the membrane 633a carries a sweep gas (e.g., nitrogen gas, high-humidity air, inert gas, and/or the like) that transports permeated fluid (e.g., water vapor) away from the porous membrane 633a after it has permeated through the porous membrane. In certain embodiments, the sweep gas may carry the permeated water vapor to a compressor 652 and/or a condenser 627, where the water vapor condenses into liquid water. The sweep gas may be separated from the permeated water vapors by bringing the mixture to the water dew point and ultimately the sweep gas may be directed away from the liquid water along flow path 659, leading out of the storage tank 655. The sweep gas may be directed back to a storage tank, and it may be recycled into the system along flow path 660 as discussed above. Condensing the permeated water vapor into liquid enables the water to be stored in the product water tank 655. In certain embodiments, the SGMD configuration utilizes an inert gaseous state fluid as a sweep gas that does not contaminate the product water. In certain embodiments of SGMD, the flow of gas into the permeate flow path 633c is heated to retain the physical state of the permeated water (vapor state). To aid in maintaining the vapor state, heat tracing elements may be utilized to prevent the fluid pipe walls from cooling the fluid to liquid state. The water vapor may then be transported to a condenser 627 downstream from the membrane-based water extraction device 633 to condense the water, which is then stored within the water storage tank 655. Moreover, in the SGMD embodiments, the sweep gas may be introduced along flow path 660 and 650 into the membrane-based water extraction device. The sweep gas may be directed away from the liquid water after condensation by directing the sweep gas out of the water storage tank, such as along flow path 659 as shown in FIG. 1B.

In certain embodiments, the water extraction module comprises one or more heating mechanisms along a flow path leading the desiccant fluid into the intake of the membrane-based water extraction device (on the desiccant side 633b of the membrane 633a). In one example embodiment, the desiccant fluid is heated to a temperature between about 40-80°C. The process may result in adequate separation even at low temperatures (approximately 40°C). In certain embodiments, the efficiency of separation may be increased at higher temperatures (e.g., between about 60-80°C).

For example, diluted desiccant leaving the absorber module passes through one or more heating subsystems between the absorber module and the membrane-based water extraction device. These heating subsystems are provided as a part of the water extraction module. The one or more heating subsystems may comprise one or more of: a condenser 627, a pre-extraction heat exchanger 629, and/or a heater 631. It should be understood that the one or more heating subsystems may be provided in any order relative to the flow of desiccant. In one example, the diluted desiccant, which remains cool after passing through the absorber 610, passes through a condenser 627 which utilizes the generally cool temperature of the dilute desiccant to encourage condensation of water vapor from water vapor flowing along the permeate water flow path 651-654 (e.g., the water flow path encompassing the water flow path on the second side of the porous membrane). In certain embodiments, the condenser 627 is a shell-and-tube heat exchanger, with the dilute desiccant (upstream of the membrane-based water extraction device 633) passing through the tubes, and the water vapor condensing on the exterior of the tubes within the shell of the heat exchanger. In another embodiment, the condenser 627 is a plate-and-frame heat exchanger, with the dilute desiccant fluid passing through one set of plates and the water vapor passing through the other set of plates, and the water vapor condenses in the heat exchanger as it traverses through the heat exchanger as it warms the dilute desiccant. In another embodiment, the condenser 627 is a double-pipe heat exchanger where the dilute desiccant passes through the inner pipe and the water vapor passes through the outer pipe such that it may condense on the exterior surface of the inner pipe. In certain embodiments the condenser 627 may have a counter-flow configuration (the dilute desiccant flowing in an opposite direction than the water vapor). In other embodiments, the condenser 627 may have a parallel, co-current flow configuration in which the dilute desiccant and the water vapor flow in the same direction through the condenser 627.

The dilute desiccant exiting the condenser 627 via the flow path represented at 628 has an increased temperature due to a certain amount of heat transfer that is transferred from the water vapor to the dilute desiccant within the condenser 627. The dilute desiccant then passes through a pre-evaporator heat exchanger 629 (e.g., a shell-and-tube heat exchanger, a plate-and-frame heat exchanger, a dual-tube heat exchanger (with concentric tubes), and/or the like) and/or heater 631 (e.g., an externally powered heater, such as an electric heater, a natural gas heater, a solar heater and/or the like) to increase the temperature of the dilute desiccant to or near the evaporation temperature. In certain embodiments, the heater may be an inline electric heater with heating element bundles for heating the dilute desiccant fluid. The heater may have an orientation to reduce the likelihood of fluid flashing on the elements. The heater 631 may be positioned within the housing of the membrane-based water extraction device. In certain embodiments, the heater is a heat exchanger (e.g., a shell-and-tube heat exchanger, a plate-and-frame heat exchanger, and/or the like). In certain embodiments, the heater 631 is a solar heater utilizing photovoltaic panels to generate electrical energy to drive electrical heater elements (e.g., resistive heater elements). In certain embodiments, the heater 631 is a frenal lens heater utilizing solar energy to generate thermal energy in the form of heat. In certain embodiments, the heater 631 comprises a geothermal heater mechanism comprising a series of pipes extending into the ground to utilize geothermal energy to heat the dilute desiccant fluid. In other embodiments, the heater 631 is a fired heater utilizing a hydrocarbon fuel source (e.g., natural gas, oil, wood, biomass, and/or the like) combined with oxygen (supplied from ambient air) to create heat from combustion.

In embodiments comprising both a pre-extraction heat exchanger 629 and heater 631, the dilute desiccant fluid first exits the pre-extraction heat exchanger 629 via flow path represented at 630 before entering the heater 631. Moreover, as discussed in greater detail herein, the opposite side of the pre-extraction heat exchanger 629 is provided with heated rich desiccant fluid exiting the membrane-based water extraction device.

As the desiccant flows out of the heater 631 (if used), it flows along a flow path 632 into the housing, specifically into the desiccant inlet of the membrane-based water extraction device. In the membrane-based water extraction device, the desiccant solution is brought into direct contact with the membrane. Utilizing the difference in temperature, pressure, and/or concentration, the water migrates though the membrane and is collected on the second side. The water may migrate through the membrane as a liquid and/or as a vapor. The water may then be distributed for use and/or collected in a storage tank 655. In certain embodiments, the vapor on the liquid water side of the membrane may be collected in cool liquid water or another cool fluid to condense the vapor. The vapor on the liquid water side of the membrane may be swept away from the membrane using a sweep gas that flows through the membrane-based water extraction device on the liquid water side of the membrane. The vapor may then be condensed in a further process using a heat transfer process such as a heat exchanger or other embodiment of heat transfer process to condense the water vapor into liquid water (the opposite side of the heater exchanger and/or condenser may define a portion of a flow path of a chilled fluid, such as the dilute desiccant prior to entry into the desiccant side of the membrane-based water extraction device). In certain embodiments the vapor directly enters a heat transfer process on the permeate side of the membrane after exiting the membrane-based extraction device 633. The heat transfer process may be a heat exchanger 629 or other embodiment of heat transfer process to condense the water vapor into liquid water. In other embodiments, a vacuum may be induced on the permeate side of the membrane to achieve a difference in pressure between the desiccant side and permeate side of the membrane. The water enters the membrane as a liquid and/or vapor and exits the membrane on the permeate side as a vapor. The water flow path leads the water into a storage tank 655 (via flow paths 651-654, inclusive of pump(s), heat exchanger(s) 627, compressor(s) 652, and/or other flow-assisting devices. The water flow path also circulates from the storage tank via flow path 650 (inclusive of one or more pumps in certain embodiments, not shown) to the membrane-based water extraction device 633. In certain embodiments, a sweep gas (e.g., humid air) is blown through the water flow path (e.g., via a blower in-line with the water flow path) to push water vapor out of the membrane-based extraction device 633 into the compressor 652 and ultimately into the condenser 627.

In certain embodiments, the vapor on the permeate side is compressed through mechanical and/or thermal means to a higher pressure (e.g., via compressor 652). The vapor is then passed through a heat exchanger 627 to allow the latent heat to be used to heat the desiccant solution. Through this heat exchanger the vapor is also condensed as a liquid.

The membrane-based water extraction device 633 may be configured for batch operation, wherein the desiccant circulates within a closed loop to repeatedly contact the desiccant fluid with the membrane (without directing the desiccant to the absorption module) until a desired quantity of water has been separated. Valves within the water extraction module may be configured to provide the closed-loop flow of the desiccant solution. After the concentration of the desiccant solution reaches a desired level, the desiccant solution is then sent back to the absorption module by reconfiguring the valves to enable flow of desiccant from the water extraction module to the absorption module. The membrane-based water extraction device 633 may encompass a system of parallel subunits where multiple membranes are held in a single apparatus and/or multiple membrane-based water extraction devices are operated in parallel (with each device operating to separate water from a portion of the desiccant solution). In certain embodiments the membrane separation subunits may also be configured in a series configuration. In this configuration the desiccant solution is contacted with the first membrane and a certain amount of water migrates through the first membrane. The retentate desiccant solution from the first membrane is fed to a second membrane as the desiccant solution where an additional quantity of water is separated from the desiccant solution. The process is repeated for the number of membrane separation subunits in the series setup. In certain embodiments a combination of the parallel and series units may be utilized.

In certain embodiments the membrane-based water extraction device 633 is configured for continuous operation where a stream of desiccant is flowed in direct contact (e.g., perpendicular, parallel or tangential to the membrane face) with the membrane, and water is continuously separated from the desiccant solution via the membrane. The continuous mode operation may utilize series and/or parallel subunits as described in the section above. During continuous operation, the desiccant flows in a continuous loop from the absorption module to the water extraction module and back to the absorption module.

In certain embodiments, the membrane-based water extraction device may be provided in combination with an evaporation-based water extraction device (e.g., an evaporation vessel for evaporating water from the desiccant, and a condenser for condensing the evaporated water into potable liquid water). For example, the membrane-based water extraction device may be provided upstream (along the desiccant flow path) from an evaporation vessel such as an evaporation vessel as described in co-pending U.S. Patent Appl. No. 17/552,173, filed December 15, 2021. The membrane-based water extraction device may alternatively (or additionally) be positioned downstream (along the desiccant flow path) of an evaporation vessel as discussed above.

### Carbon Dioxide Capture

Processed air (which may comprise air exiting a water consolidation system as discussed herein) may be passed through a carbon dioxide capture system prior to exhaustion to the atmosphere. The carbon dioxide may be captured from the air for filtration and/or disposal (e.g., through one or more chemical processes to convert the carbon dioxide into water, oxygen, and/or a solid or liquid composition that may be disposed of; through capture of the carbon dioxide in a filtration media; and/or the like).

The carbon dioxide capture system may comprise a carbon dioxide capture column 102 having a fixed bed of a carbon dioxide absorbing material (e.g., a sodium hydroxide solution). As air is passed over the carbon dioxide absorbing material, the carbon dioxide is absorbed by the material. Moreover, as shown in FIG. 1, the carbon dioxide capture column 102 may be heated (e.g., with a hot fluid jacket) to facilitate increased carbon dioxide absorption by the absorbing material.

As yet other examples, the carbon dioxide capture material may be configured to reversibly absorb the carbon dioxide, such that the captured carbon dioxide may be compressed and stored as a gas for later use.

In certain embodiments, captured carbon dioxide gas may be directed to a greenhouse to optimize the internal greenhouse environment for plant growth. As discussed herein, the greenhouse may be supplied by water generated by the AWG system discussed herein.

### Solar Canopy

The AWG system may be associated with a greenhouse or other agricultural system for facilitating plant growth (e.g., consumable plant growth). The greenhouse or other agricultural system for facilitating plant growth may comprise one or more features for optimizing conditions within the greenhouse for encouraging plant growth. As one example, a greenhouse may incorporate one or more features enabling sunlight control by varying light directionality, intensity, and color to facilitate achievement of ideal plant growth conditions.

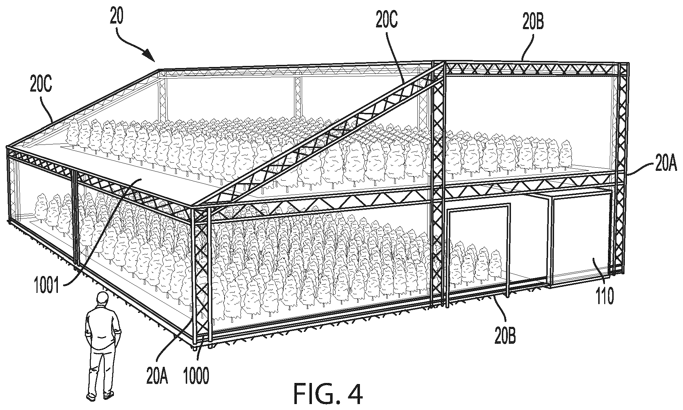

In various embodiments, a solar canopy may be provided as a surface covering for a plant growth habitat (e.g., greenhouse), as discussed in greater detail herein. The solar canopy may be configured to be secured to at least a portion of the support structure of the plant growth habitat. The support structure of a plant growth habitat may comprise a plurality of frame members that are connected together to form a support frame of a desired shape for receiving the solar canopy and/or other materials (e.g., structural panels, and/or the like) of the plant growth habitat. As a specific example, as shown in FIG. 4, the support structure may comprise a plurality of vertical frame members 20A (e.g., beams, pillars, and/or the like), horizontal frame members 20B, and diagonal frame members 20C that are connected together and spaced apart to form a support frame 20 that defines a perimeter of the plant growth habitat (e.g., greenhouse) and an interior of the plant growth habitat. The frame 20 may be made out of one or more of a variety of materials (e.g., metal, wood, plastic, and/or any suitable materials). In some embodiments, the frame 20 may be a rigid frame. In some embodiments, the frame 20 may be flexible. In some embodiments, the frame 20 may be collapsible (e.g., foldable).

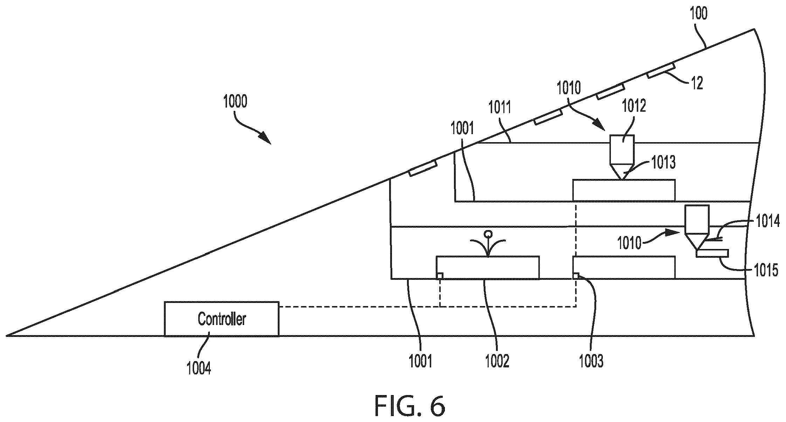

With reference to FIG. 6, a plurality of solar canopy 100 may be integrated or otherwise attached together to define a portion of a surface covering or the entirety of a surface covering, where the opacity of each solar canopy 100 may be independently controllable, such that the opacity over different regions of a plant growth habitat (e.g., greenhouse) with a solar canopy covering may be varied independently. In certain embodiments, the opacity of each solar canopy 100 of the surface covering may be independently controllable via one or more environment control system 1004. In certain embodiments, the one or more environment control system 1004 may be in electronic communication with a voltage/power source (e.g., battery, electric field generator, and/or the like), where the one or more environment control system 1004 may be configured to independently control the application of an external signal (e.g., electric field signal) from the voltage/power source to a liquid crystalline fluid of a solar canopy 100. In certain embodiments, each solar canopy 100 may be associated with an identifier, where each identifier may correspond to a location of the greenhouse, such that the environment control system 1004 may individually control each solar canopy 100 (thus, a particular region of the greenhouse) based, at least in part, on the identifiers.

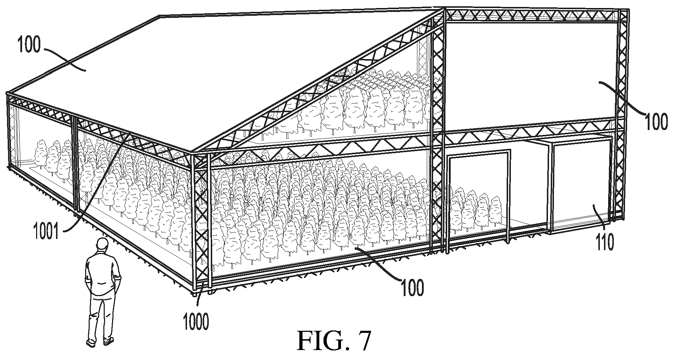

In various embodiments, the solar canopy 100 may be utilized in a plant growth habitat (e.g., greenhouse) to control the amount or the intensity of light and directionality with respect to different regions of the plant growth habitat. As an example, for optimum plant growth, different plants within the greenhouse may require different light intensity and directionality at different periods. As shown in FIG. 7, a greenhouse utilizing a solar canopy 100 as discussed herein may control the opacity of the solar canopies 100, such that different regions have different opacity levels.

In various embodiments, the method of using a solar canopy 100 may comprise determining the identifier associated with a solar canopy 100 or region of a solar canopy 100 (thus a particular region of greenhouse) and applying the appropriate signal (e.g., electric field) to the corresponding solar canopy 100 and/or solar canopy region to vary the opacity of the corresponding greenhouse region.

### Automated Usage

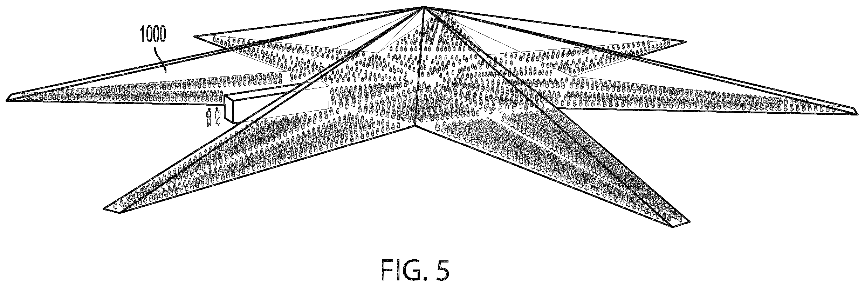

The AWG system may be utilized to generate water and/or power to be supplied to an agricultural module, which may comprise a greenhouse, plant growth habitat, and/or other structure that may be utilized to encourage plant growth within controlled atmospheric conditions. FIGS. 4-5 illustrates various embodiments of an agricultural module 1000 in association with an AWG system 110 housed within a shipping container according to one embodiment. As shown in the figures, the agricultural module 1000 may define a plant growth habitat having an at least substantially rectangular shape, or a shape with a plurality of separate lobes (e.g., to form a star-shape, as shown in FIG. 5). In embodiments comprising separate lobes, the volume within each lobe may be separated from the remainder of the growth habitat, such that each lobe may be provided with a unique growth environment (e.g., different temperatures, carbon dioxide levels, humidity levels, and/or the like) to foster growth of different agricultural products.

### Example Automated Usage

The AWG system may be integrated with a greenhouse, or any other water consuming environment including, as examples, a biosphere environment, a housing structure, a recreational facility, and/or the like. As one example, the AWG system may be utilized to generate water and/or power to be supplied to an agricultural module, which may comprise a greenhouse, plant growth habitat, and/or other structure that may be utilized to encourage plant growth within controlled atmospheric conditions. FIGS. 4-5 illustrates various embodiments of an agricultural module 1000 in association with an AWG system 110 housed within a shipping container according to one embodiment. As shown in the figures, the agricultural module 1000 may define a plant growth habitat having an at least substantially rectangular shape, or a shape with a plurality of separate lobes (e.g., to form a star-shape, as shown in FIG. 5). In embodiments comprising separate lobes, the volume within each lobe may be separated from the remainder of the growth habitat, such that each lobe may be provided with a unique growth environment (e.g., different temperatures, carbon dioxide levels, humidity levels, and/or the like) to foster growth of different agricultural products.

FIG. 6 shows a schematic detail view of a portion of a growth habitat of an agricultural module 1000 according to one embodiment. The growth habitat of the agricultural module 1000 may comprise one or more stackable structures 1001 each having one or more base portions 1002 configured to support a growth medium (e.g., soil, a hydroponic support, and/or the like) one or more sidewalls and a ceiling. The stackable structures 1001 may be suspended from support frames of the growth habitat, may be stacked such that the support of an upper structure is supported by a lower structure, and/or the like. The one or more sidewalls and ceiling are configured to contain the controlled atmospheric conditions within the structure (e.g., environmental air having controlled oxygen and carbon dioxide levels, controlled temperature, controlled humidity, and/or the like). The one or more sidewalls and ceiling may comprise a covering material, such as a flexible covering material, a rigid covering material, and/or the like. In certain embodiments, the covering material may comprise integrated growth lamps (e.g., light emitting diode growth lamps) and/or integrated electrical circuitry and/or may be configured to enable natural sunlight to pass through the covering material to the contained environment. In certain embodiments, the integrated growth lamps may be spaced at regular intervals throughout the flexible covering material and may be electrically connected relative to one another and/or relative to one or more power sources via electrical circuitry. For example, in the illustrated embodiment of FIG. 6, the covering material comprises a solar canopy (e.g., solar canopy 100) as discussed herein, with integrated LEDs 12 spaced across the surface of the solar canopy.

In certain embodiments, the LEDs 12 may be directed through an inner side of the solar canopy 100 (e.g., through a second flexible protective sheet, such as into an interior of a greenhouse, in embodiments in which the solar canopy encloses a greenhouse), opposite the outer side of the solar canopy 100, such that the LEDs 12 emit light through the inner side of the solar canopy 100. In certain embodiments the LEDs 12 may be aligned with the one or more photovoltaic elements and may be configured to emit light toward a back side of the photovoltaic elements, such that the light reflects off of the back side of the photovoltaic elements and through the inner side of the solar canopy 100. The LEDs 12 may additionally be connected to one or more conductors (which may be provided in series with the photovoltaic elements, in parallel with the photovoltaic elements, or in a separate circuit from the photovoltaic elements). In certain embodiments, the LEDs 12 may receive electrical power from the plurality of photovoltaic elements. Additionally, or alternatively, in certain embodiments, various LEDs 12 may be suspended from the solar canopy 100 (e.g., into an interior of a greenhouse). For example, LEDs may be suspended within a growth habitat of an agricultural module 1000 (as shown in FIGS. 4-6) surrounded by one or more solar canopy 100, such that the LEDs provide additional light to plants growing therein from additional angles (e.g., proximate a growth medium in which the plants are growing).

In embodiments comprising flexible covering materials, the agricultural module 1000 may comprise one or more rigid supports collectively forming a rigid support frame for the flexible covering material.

In certain embodiments, the agricultural module 1000 may be embodied as a portable system that is configured to be quickly set up at a desired agricultural site. The agricultural module 1000 may additionally comprise one or more sensors 1003 that may be provided within the growth medium of the growth habitat. These sensors may be embodied as a portion of a flexible bundle of electrical circuitry, including conductors, sensors, and/or the like that may be quickly deployed within a growth habitat by unrolling the bundle onto a support surface of the growth habitat before providing the growth medium therein. In certain embodiments, the various sensors may be electrically connected relative to one another, relative to an environment control system 1004, and/or relative to a power source via one or more conductors (e.g., flexible conductors). The various sensors may comprise moisture sensors, temperature sensors, carbon dioxide content sensors, oxygen sensors, humidity sensors, and/or the like. It should be understood that certain of the described sensors may be configured for wireless data transmission to a control computing system via one or more wireless communication technologies, such as Wi-Fi, Bluetooth, Internet of Things (IoT) technologies, and/or the like.

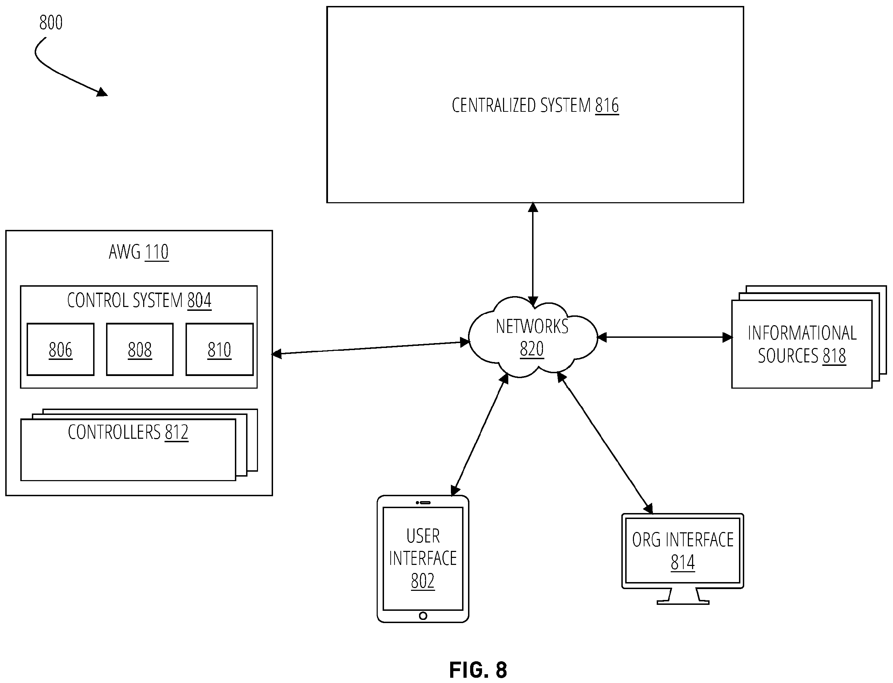

In certain embodiments, sensor outputs (e.g., indicative of measured aspects of the environment within the growth habitat) may be utilized by the environment control system 1004 (and/or control system shown in FIGS. 8-12) to regulate the environmental conditions within the growth habitat. For example, the environment control system 1004 may comprise data indicative of one or more target environmental conditions, such as a target temperature, target carbon dioxide content, and/or the like. Based, at least in part, on the monitored data output from the various sensors 1003 within the growth habitat, the environment control system 1004 is configured to compare the monitored data output against the target environmental conditions, and may be configured to adjust water flows, carbon dioxide flows, and/or the like from the AWG system 110 into the growth habitat. For example, the environment control system 1004 may be configured to automatically activate sprinkler (or drip irrigation) systems (which may be incorporated into the stackable structures 1001) within the growth habitat to water the plants within the growth habitat in response to predetermined conditions; to increase and/or decrease the amount of carbon dioxide flowing into the growth habitat from carbon dioxide capture systems of the AWG system 110, and/or the like.

Moreover, the growth habitat may comprise one or more automated planting and harvesting mechanisms configured to autonomously plant seeds for new plants, and/or to automatically harvest fruits and/or vegetables grown within the growth habitat (this includes the use of agricultural robots and drones).

For example, seed planting/management may be provided via a planting probe 1010 operable to move along a grid/track system 1011 elevated above a support surface of the growth habitat. In certain embodiments, the grid/track system 1011 may be raised and/or lowered via a support mechanism (e.g., a pneumatic and/or hydraulic support mechanism). The planting probe 1010 may be operable in response to signals received from the environment control system 1004, which comprises data indicative of an internal mapping of the planting medium and/or base portions 1002 within the growth habitat. The environment control system 1004 additionally comprises data indicative of a desired crop, crop spacing, and/or the like for planting within the growth habitat and may provide movement signals to the planting probe 1010 to insert seeds into the planting medium according to a desired planting plan.

The planting probe 1010 itself may comprise a hopper 1012 configured to hold a volume of seed, and an insertion probe 1013 (e.g., a wedge-shaped insertion probe) configured to inject seed at an appropriate depth within the planting medium (as determined by the environment control system 1004). The planting probe 1010 additionally comprises a movement mechanism (e.g., one or more motors) configured to move the planting probe 1010 along the track/grid to plant seeds within the planting medium. Moreover, the planting probe 1010 may be configured to periodically return to a refill position within the growth habitat to retrieve additional seed within the included hopper 1012. The refill position may be positioned within the growth habitat, proximate a fill chute containing additional seed that may be selectively provided to the planting probe 1010 as needed. In certain embodiments, the fill chute may be embodied as a container supported (e.g., suspended) above the movement path of the planting probe, such that the planting probe 1010 may move below the fill chute to be refilled by gravitational force moving the seed from the fill chute into the planting probe 1010. Moreover, in certain embodiments the fill chute may comprise an actuatable feed door (e.g., a servo-actuated feed door) configured to open and allow a flow of seed out of the feed chute in response to a signal received from the environment control system 1004. Thus, when the planting probe 1010 is positioned beneath the feed chute, the environment control system 1004 may be configured to open the feed door to enable seed to flow from the feed chute to the planting probe 1010. Once an appropriate amount of seed has been provided to the planting probe 1010, the environment control system 1004 may transmit a second signal causing the feed door to close.

The planting probe 1010 may additionally comprise a harvesting mechanism that may be detachably secured relative to the movable planting probe 1010. The harvesting mechanism may comprise a mechanically movable cutting/picking arm 1014 and a holding basket/tray 1015. Once the planting probe 1010 receives signals from the environment control system 1004 to initiate the harvest process, the planting probe 1010 may process to pick and/or cut produce/plants from the various plants within the growth habitat, and to deposit the cut produce/plants into the holding basket/tray 1015. Once the holding basket/tray 1015 is full, the planting probe 1010 may return to a docking position, where the holding basket/tray 1015 may deposit the harvested items into a retention crate that may be removed from the growth habitat. Moreover, in certain embodiments the retention crate may comprise one or more level sensors configured to monitor the amount of harvested items within the retention crate to avoid the retention crate from overflowing. Upon detecting that the retention crate fill level is above a threshold level, the environment control system 1004 may be configured to transmit a signal to the planting probe 1010 to suspend harvesting operations until the retention crate is emptied.

Although described above in reference to a track-based planting and harvesting probe configuration, various embodiments may be configured to plant seeds and/or harvest produce via an unmanned aerial vehicle (UAV) comprising a planting probe and/or a harvesting probe having a configuration similar to that described above. The UAV may be autonomous and may be configured to navigate the interior of the growth habitat according to a defined planting plan. In certain embodiments, the planting plan may define a map of locations of intended seed plantings, such that the autonomous UAV may be configured to autonomously navigate between the plurality of intended seed planting locations to deposit seeds within the growth medium.

The autonomous UAV may additionally comprise a harvesting probe configuration similar to that described herein. The UAV with the harvesting probe configuration may be configured to autonomously navigate the interior of the growth habitat to harvest produce grown therein.

The irrigation system of the growth habitat may be embodied as one or more tubes that may be connected to water distribution mechanisms, such as spraying-style sprinklers, drip-irrigation tubes, and/or the like. The tubes may comprise a plastic, flexible tubing and may be embodied as a self-healing material configured to self-seal cracks, cuts, and/or punctures through the tube walls. These tubes may be connected to a water outlet of a condensation system of the AWG system, a water holding tank of the AWG system, and/or the like.

Moreover, the irrigation system may comprise a fertilizer supply mechanism configured to automatically mix a metered quantity of fertilizer (e.g., a liquid fertilizer) into water supplied to the irrigation system. The fertilizer supply mechanism may be in electronic communication with the environment control system 1004, which may be configured to provide signals to the fertilizer supply mechanism to modify the amount of liquid fertilizer introduced into the water stream.

### Example Operation of an Atmospheric Air Generation System

The following discussion provides an example operation of an embodiment utilizing a membrane-based water extraction process as a part of an atmospheric water generation system and method. The membrane-based water extraction process is one of a plurality of example water extraction processes. Other example water extraction processes, for example, may include membrane-less water extraction processes (as described in co-pending US Patent Appl. No.: 18/179,750, filed on March 7, 2023, electrostatic nucleation water extraction processes (as described in co-pending US Patent Appl. No.: 18/199,427, filed on May 19, 2023, photosensitive sorbent materials water extraction processes (as described in co-pending US Patent Appl. No.: 18/538,832, filed on December 13, 2023.

It should be noted that recitation of the term "about" with reference to a numerical value (e.g., a temperature value, a pressure value, and/or the like) encompasses both the value itself as well as deviations from the value that provide the same functional operation of the methodology in which the value is recited. For example, a recitation of a temperature range between "about" 10°F to "about" 50°F is intended to encompass a temperature range between 10°F to 50°F, as well as slight deviations in the upper and lower bounds of the temperature range that provide the same functionality as the recited temperature range. Moreover, the concepts discussed herein may be utilized with any of a variety of desiccant fluids, gels, aerogels, and/or the like, as the described process is not dependent on the desiccant utilized. Any one of a plurality of desiccant fluids may be utilized, including the non-limiting examples of CaCl₂, NaCl, LiCl, KCOOH, MgCl₂, Ionic liquids, Deep Eutectic Solvent, Organic Liquids, and/or any combination thereof.

As an example operation, a desiccant fluid exits the absorber at a concentration between about 10% and about 50% by weight percent, and a temperature between about 75°F and about 130°F. The desiccant fluid flows along a flow path (using one or more pumps, as needed) through one or more heating mechanisms, such as a condenser (utilizing the relatively cool temperature of the dilute desiccant on a first side of the condenser to condense water vapor flowing within a water flow path as discussed in greater detail herein, wherein the water flow path flows on an opposite side of the heat exchanger embodied as the condenser). Water vapor condenses in the condenser as it traverses through the condenser as it warms the dilute desiccant fluid. In another embodiment, the condenser is a double pipe heat exchanger where the dilute desiccant fluid enters the double pipe heat exchanger through the inner pipe. Water vapor enters the heat exchanger via the outer pipe. Water vapor condenses on the exterior surface of the inner pipe as it traverses through the condenser.

In certain embodiments, the flow pattern through the condenser is in a counter current orientation with the dilute desiccant solution flowing in a first direction and the water flow path flowing in an opposite second direction through the heat exchanger (as mentioned, the dilute desiccant fluid is physically separated from the water flow path within the condenser). In other embodiments flow patterns through the condenser are in the co-current orientation depending on the shape and orientation of the heat exchanger embodying the condenser.

Upon exiting the condenser, the dilute desiccant fluid temperature is between about 132°F and about 170°F. The dilute desiccant fluid is then sent to a second heat exchanger 629 where sensible heat transfer from rich desiccant fluid exiting the membrane-based water extraction device further heats the dilute desiccant fluid. In certain embodiments the second heat exchanger is a shell-and-tube heat exchanger with the dilute desiccant fluid entering on the tube side of the second heat exchanger. Rich desiccant fluid enters the shell side of the second heat exchanger. In another embodiment, the dilute desiccant fluid enters the shell side of the second heat exchanger, and the rich desiccant fluid enters the tube side of the second heat exchanger. In another embodiment the second heat exchanger is a plate and frame heat exchanger. Dilute desiccant fluid enters one set of plates while rich desiccant fluid enters the other set of plates. In another embodiment the second heat exchanger is a double pipe heat exchanger where the dilute desiccant fluid enters the double pipe heat exchanger via the inner pipe and rich desiccant fluid enters the heat exchanger via the outer pipe.

The dilute desiccant fluid exits the second heat exchanger at a temperature of between about 140°F and about 210°F. The dilute desiccant fluid then traverses through a heater. The heater may be an inline electric heater with element bundles for heating the fluid. The heater may have different orientations to reduce the likelihood of fluid flashing on the elements. In certain embodiments, the heater may reside in the membrane-based water extraction device housing. In certain embodiments the heater is a heat exchanger of the shell-and-tube or plate-and-frame type. In certain embodiments the heater is a solar heater utilizing photovoltaic panels to generate energy through electricity from solar capture. In certain embodiments, the heater is a frenal lens utilizing solar energy to generate thermal energy in the form of heat. In certain embodiments the heater is a geothermal heater as discussed herein. In certain embodiments the heater is a fired heater utilizing a hydrocarbon fuel source combined with oxygen to create heat from combustion. In certain embodiments, the oxygen is used from the ambient air. Upon exiting the heater, the dilute desiccant fluid is at a temperature of between about 150°F and about 270°F.

The dilute desiccant fluid then flows into to membrane-based water extraction device. In certain embodiments, a reducing orifice is provided at the exit of the membrane-based water extraction device to increase the pressure on the desiccant side of the membrane within the housing of the membrane-based water extraction device.

The dilute desiccant flow flows into the housing of the membrane-based water extraction device, on a first side of the membrane. The dilute desiccant flow is at a high temperature (e.g., between about 150°F and about 270°F) and a high pressure. A water flow passes on an opposite, second side of the membrane as it flows along a water flow path. The water flow path may pass through a reducing orifice at the entry to the membrane-based water extraction device to reduce the pressure on the water flow side of the membrane to encourage water to pass through the membrane to the water flow side of the membrane. Moreover, the water flow passes through a chiller prior to entry into the housing of the membrane-based water extraction device.

As the diluted desiccant and the water flow through the housing of the membrane-based water extraction device on opposite sides of the membrane, water absorbed within the fluid desiccant migrates through the membrane (it is believed that the water enters the membrane on the desiccant side of the membrane as a liquid, and exits the membrane on the water side of the membrane as a vapor). This reconcentrates the desiccant fluid, while capturing water vapor within the permeate water flow path for later condensation and storage for use as liquid water. The reconcentrated desiccant fluid them flows back to the absorber (e.g., passing through one or more heat exchangers for sensible heat transfer to the dilute desiccant solution as discussed above) by passing through one or more chiller devices to cool the temperature of the desiccant fluid prior to entry into the absorber. The entire flow path of the desiccant is a closed desiccant circulation loop configured for negligible mass transfer of desiccant salt through the membrane of the membrane-based water extraction device and/or into atmospheric air contacting the desiccant flow within the absorber. As the desiccant flows along the flow paths within the closed desiccant circulation loop, water is absorbed into the desiccant and/or extracted from the desiccant as the desiccant flows through the AWG system.

The water flow path exiting the membrane-based water extraction device passes out of the membrane-based water extraction device and passes through one or more condensers. In certain embodiments, a sweep gas (e.g., a gas having characteristics to lower the possibility of water evaporation into the gas and/or a high-humidity air flowing along a closed-air circulation loop coextensive with the water flow path) flows with the liquid water so as to flow the water vapor out of the membrane-based water extraction device and to the condensers. In certain embodiments, the water flow passes through a compressor to increase the pressure of the water flow (thereby increasing the vapor pressure of the water vapor to encourage condensation) prior to passing the water flow through the one or more condensers. After the water flow path passes through the condenser, the water flow path passes into a storage tank. Certain amounts of water from the storge tank recirculate through the water flow path (to the membrane-based water extraction device) to encourage extraction of additional water from dilute desiccant fluid flowing through the membrane-based water extraction device.

### Example AWG Control Systems

The following discussion provides example optimized control operations of an embodiment of an AWG system that is optimized for a particular environment. In various embodiments, an AWG system may be configurable based, at least in part, on the water usage requirements of a particular environment. For instance, the AWG system may generate water based, at least in part, on input data, such as demographic information (e.g., age, sex, weight, height, etc.) for occupants of an environment, water usage information (e.g., current and/or historical water usage at different times, etc.), water-dependent facilities (e.g., number of sinks, toilets, showers, sprinkler, etc.), water storage capacities (e.g., storage tank size, etc.), and/or any other data reflective of an end user's water requirements. Due to the power requirements of the AWG system, the system may be optimized by selectively powering the system to satisfy water requirements for a particular environment using the lowest possible input energy.

FIG. 8 shows a schematic of an example AWG computing ecosystem 800 according to one embodiment. As depicted, the AWG computing ecosystem 800 may include an AWG system 110, a centralized system 816, a user interface 802, an organizational interface 814, and/or one or more informational sources 818. In some examples, each of the AWG system 110, the centralized system 816, the user interface 802, the organizational interface 814, and/or the one or more informational sources 818 may communicatively connected over one or more networks 820.

In various embodiments, the AWG system 110 may include a membrane-based water extraction system, as described herein. In addition, or alternatively, the AWG system 110 may implement a membrane-less extraction process. In some examples, the AWG system 110 may include electrostatic nucleation, photosensitive sorbent materials, and/or the like.

In some embodiments, the AWG system 110 may be integrated with a control system 804 and one or more controllers 812. The control system 804, for example, may include and/or be in communication with (e.g., via one or more wired and/or wireless connections, etc.) one or more controllers 812 coupled (e.g., via one or more wired and/or wireless connections, etc.) with one or more subsystems of the AWG system 110, such as the humidity increasing system, the air preconditioning system, the power generation module, one or more valves (e.g., electromechanical mixing valves, etc.), motors, actuators, heat condensers, and/or the like. In some examples, the control system 804 may be and/or include an environment control system (see FIG. 6). For example, the control system 804 may be physically and/or wirelessly integrated with a controlled environment (and/or one or more components thereof), such as a greenhouse (see FIGS. 4-7), and/or with an artificially intelligent AWG system 110 within a controlled environment. In some examples, the control system 804 may be physically and/or wirelessly integrated with an AWG system 110 within an at least partially uncontrolled environment (e.g., a housing complex, recreational facility, etc.).

In various embodiments, the control system 804 may be configured to selectively power, run, initiate, schedule, and/or the like one or more components and/or subsystems of the AWG system 110 through communication with the one or more controllers 812. For instance, the control system 804 may be configured to selectively control the operation of the AWG system 110 (e.g., via one or more control instructions to the one or more controllers 812, etc.) based, at least in part, on one or more optimization inputs. In some examples, the control system 804 may autonomously operate the AWG system 110 using an optimization module configured to satisfy water requirements for a particular environment using the lowest possible input energy.

The control system 804 may include memory 806 and one or more processors 808 communicatively coupled to the memory 806. In some examples, the memory 806 may include one or more non-transitory computer-readable storage media including instructions that, when executed by the one or more processors 808, cause the one or more processors 808 to perform one or more training and/or optimization operations of the present disclosure. The one or more processors 808, for example, may communicate with other elements within the control system 804 via a bus.

In some embodiments, the one or more processors 808 may be embodied as one or more complex programmable logic devices (CPLDs), microprocessors, multi-core processors, coprocessing entities, application-specific instruction-set processors (ASIPs), microcontrollers, and/or the like. Further, the one or more processors 808 may be embodied as one or more other processing devices or circuitry. The term circuitry may refer to an entirely hardware embodiment or a combination of hardware and computer program products. Thus, the one or more processors 808 may be embodied as integrated circuits, application specific integrated circuits (ASICs), field programmable gate arrays (FPGAs), programmable logic arrays (PLAs), hardware accelerators, other circuitry, and/or the like.

As will therefore be understood, the one or more processors 808 may be configured for a particular use or configured to execute instructions stored in volatile or non-volatile media or otherwise accessible to the one or more processors 808. As such, whether configured by hardware or computer program products, or by a combination thereof, the one or more processors 808 may be capable of performing steps or operations according to embodiments of the present disclosure when configured accordingly.

In some embodiments, the memory 806 may include non-volatile media (also referred to as non-volatile storage, memory, memory storage, memory circuitry, and/or similar terms used herein interchangeably). In some embodiments, the non-volatile media may include one or more non-volatile memory, including, but not limited to, hard disks, ROM, PROM, EPROM, EEPROM, flash memory, MMCs, SD memory cards, Memory Sticks, CBRAM, PRAM, FeRAM, NVRAM, MRAM, RRAM, SONOS, FJG RAM, Millipede memory, racetrack memory, and/or the like. As will be recognized, the non-volatile media may store databases, database instances, database management systems, data, applications, programs, program modules, scripts, code (e.g., source code, object code, byte code, compiled code, interpreted code, machine code, etc.) that embodies one or more machine learning models or other computer functions described herein, executable instructions, and/or the like. The term database, database instance, database management system, and/or similar terms used herein interchangeably may refer to a collection of records or data that is stored in a computer-readable storage medium using one or more database models, such as a hierarchical database model, network model, relational model, entity-relationship model, object model, document model, semantic model, graph model, and/or the like.

In some embodiments, the memory 806 may include volatile media (also referred to as volatile storage, memory, memory storage, memory circuitry, and/or similar terms used herein interchangeably). In some embodiments, the volatile media may also include one or more volatile memory, including, but not limited to, RAM, DRAM, SRAM, FPM DRAM, EDO DRAM, SDRAM, DDR SDRAM, DDR2 SDRAM, DDR3 SDRAM, RDRAM, TTRAM, T-RAM, Z-RAM, RIMM, DIMM, SIMM, VRAM, cache memory, register memory, and/or the like. As will be recognized, the volatile storage or memory media may be used to store at least portions of the databases, database instances, database management systems, data, applications, programs, program modules, code (source code, object code, byte code, compiled code, interpreted code, machine code) that embodies one or more machine learning models or other computer functions described herein, executable instructions, and/or the like being executed by, for example, the one or more processors 808. Thus, the databases, database instances, database management systems, data, applications, programs, program modules, code (source code, object code, byte code, compiled code, interpreted code, machine code) that embodies one or more machine learning models or other computer functions described herein, executable instructions, and/or the like may be used to control certain aspects of the operation of the AWG system 110 with the assistance of the one or more processors 808, an operating system, and/or the one or more controllers 812.

The one or more controllers 812 may include one or more mechanical, electromechanical, and/or electronic devices that may perform a control action responsive to a control signal. By way of example, the controllers 812 may include any combination of actuators, flow controllers, level controllers, programmable logic controllers, switches, motor controller and drives, and/or the like. In some examples, each of the controllers 812 may correspond (e.g., be mounted to, etc.) to a particular component and/or subsystem of the AWG system 110. Each of the components may be controlled by supplying and/or removing a supply of power (e.g., electrical current, etc.) to a respective component, modifying one or more configuration settings, repositioning one or more valves, and/or the like.

For example, a controller may be mounted to and/or configured to control an air preconditioning system (e.g., one or more compressors, centrifugal fans, electrical motors, etc. thereof) by supplying a level of power to the compressors, centrifugal fans, electrical motors, and/or the like of the air preconditioning system. As another example, the same or another controller may be mounted to and/or configured to control water extraction module(s) of the AWG system 110 by supplying a level of power, opening and/or closing one or more inlet/outlet valves, and/or the like. The same and/or other controllers may be mounted to and/or configured to control various other components of the AWG system 110 including the absorption modules, blowers, carbon dioxide capture systems, and/or the like. For those embodiments utilizing a photosensitive material for absorption/desorption of water vapor, the same and/or other controllers may be configured to control movement of the photosensitive material and/or to control lighting illuminating the photosensitive material (e.g., by changing the wavelength of light) to change the photosensitive material to an absorption phase or a desorption phase.

In some embodiments, the control system 804 includes one or more network interfaces 810 for communicating with various computing entities (e.g., the centralized system 816, user interface 802, organizational interface 814, informational sources 818, etc.), such as by communicating data, code, content, information, and/or similar terms used herein interchangeably that may be transmitted, received, operated on, processed, displayed, stored, and/or the like. For example, the control system 804 may communicate with another computing entity for uploading or downloading data or code (e.g., data or code that embodies or is otherwise associated with one or more machine learning models). Such communication may be executed using one or more networks 820.

The one or more networks 820 may include a wired data transmission protocol, such as fiber distributed data interface (FDDI), digital subscriber line (DSL), Ethernet, asynchronous transfer mode (ATM), frame relay, data over cable service interface specification (DOCSIS), or any other wired transmission protocol. In addition, or alternatively, the one or more networks 820 may include one or more wireless external communication networks using any of a variety of protocols, such as general packet radio service (GPRS), Universal Mobile Telecommunications System (UMTS), Code Division Multiple Access 2000 (CDMA2000), CDMA2000 1X (1xRTT), Wideband Code Division Multiple Access (WCDMA), Global System for Mobile Communications (GSM), Enhanced Data rates for GSM Evolution (EDGE), Time Division-Synchronous Code Division Multiple Access (TD-SCDMA), Long Term Evolution (LTE), Evolved Universal Terrestrial Radio Access Network (E-UTRAN), Evolution-Data Optimized (EVDO), High Speed Packet Access (HSPA), High-Speed Downlink Packet Access (HSDPA), IEEE 802.11 (Wi-Fi), Wi-Fi Direct, 802.16 (WiMAX), ultra-wideband (UWB), infrared (IR) protocols, near field communication (NFC) protocols, Wibree, Bluetooth protocols, wireless universal serial bus (USB) protocols, and/or any other wireless protocol.

In some embodiments, the control system 804 is an edge device of the AWG system 110 that is configured to communicatively connect the AWG system 110 to the centralized system 816 and/or one or more other components of the AWG computing ecosystem 800. In some examples, the edge device may be physically disposed on the atmospheric water generation system.

The centralized system 816, for example, may include one or more external computing devices including memory (including any of the example memory described herein with reference to memory 806), one or more processors (including any of the example processors described herein with reference to processors 808), and/or one or more network interfaces (including any of the example interfaces described herein with reference to network interfaces 810) external to the AWG system 110. For instance, the centralized system 816 may include a connected cloud platform including a distributed serverless cloud environment, a dedicated cloud server environment, and/or the like. In some examples, the memory of the centralized system 816 may include one or more non-transitory computer-readable storage media including instructions that, when executed by the one or more processors of the centralized system 816, cause the one or more processors to perform one or more training and/or optimization operations of the present disclosure.

In some embodiments, the centralized system 816 is an intermediary computing system between a control system 804 and/or one or more remote devices, such as the one or more informational sources 818, organizational interfaces 814, user interfaces 802, and/or the like. In some examples, the centralized system 816 may host one or more computing services for use by the control system 804. By way of example, the centralized system 816 may host one or more portions of an optimization module that may be leveraged by the control system 804 to perform one or more optimized control operations. In some examples, the optimization module may include one or more machine learning models that are trained, at least in part, by the centralized system 816. In some examples, the trained models may be provided to the control system 804 to allow the control system 804 to locally implement the machine learning models and/or locally generate one or more energy-based outputs based, at least in part, on a plurality of optimization inputs. In some examples, at least a portion of the optimization inputs may be provided by the centralized system 816.

In addition, or alternatively, centralized system 816 may be configured to implement a trained machine learning model to remotely generate one or more energy-based outputs on behalf of the control system 804. In such a case, the control system 804 may provide one or more optimization inputs to the centralized system 816 and receive one or more optimized energy outputs from the centralized system 816 based, at least in part, on the optimization inputs.

In some embodiments, the centralized system 816 and/or control system 804 is configured to receive one or more optimization inputs from one or more external informational sources 818. The informational sources 818, for example, may include one or more remote data stores configured to receive, manage, store, and/or publish data for a particular domain. Example informational sources 818, for example, may include one or more weather sources, one or more water usage sources, and/or the like.

In some embodiments, the centralized system 816 and/or control system 804 is configured to receive one or more optimization inputs from an organizational interface 814. The organizational interface 814 may include a computing interface that may enable access, through one or more elastic compute interfaces, to the centralized system 816. For instance, the organizational interface 814 may include a virtual instantiation of the centralized system 816, a web portal to the centralized system 816, and/or the like.

In some embodiments, the centralized system 816 and/or control system 804 is configured to receive one or more optimization inputs from a user interface 802. The user interface 802 may include a computing interface that is accessible from a user device. The user interface 802 may include a plurality of interactive widgets that may initiate one or more control instructions and/or provide one or more optimization inputs to the centralized system 816 and/or control system 804.

In some embodiments, the control system 804 may include, or be in communication with, one or more input elements, such as a keyboard input, a mouse input, a touch screen/display input, motion input, movement input, audio input, pointing device input, joystick input, keypad input, and/or the like. The control system 804 may also include, or be in communication with, one or more output elements (not shown), such as audio output, video output, screen/display output, motion output, movement output, and/or the like.

The input/output elements may be physically integrated with the control system 804. For example, the input/output elements may include one or more tactile (e.g., physical switches, touch pads, buttons, etc.), audio (e.g., microphones, etc.), and/or vison (e.g., cameras, etc.) devices that are electrically connected (e.g., via one or more wired connections) to one or more components of the AWG system 110. As another example, the input/output elements may include one or more tactile (e.g., percussion, etc.), audio (e.g., speakers, etc.), and/or visual (e.g., display screens, etc.) output devices that are electrically connected (e.g., via one or more wired connections) to one or more components of the AWG system 110.

In addition, or alternatively, the input/output elements may include one or more input/output devices of a remote device that is communicatively connected with the control system 804. By way of example, the user interface 802 and/or organizational interface 814 may include one or more tactile (e.g., physical switches, touch pads, buttons, etc.), audio (e.g., microphones, etc.), and/or visual (e.g., cameras, etc.) input devices that are electrically connected (e.g., via one or more wired connections) to the respective interfaces. In some examples, input to the one or more input device may cause the respective interfaces to provide control signals to the control system 804 to enable remote control of the AWG system 110 through the respective interfaces. As another example, the user interface 802 and/or organizational interface 814 may include one or more tactile (e.g., percussion, etc.), audio (e.g., speakers, etc.), and/or visual (e.g., display screens, etc.) output devices that are electrically connected (e.g., via one or more wired connections) to the respective interfaces. In some examples, the respective interfaces may receive output signals from the control system 804 that may cause the respective interfaces to present AWG data to a user to enable remote monitoring of the AWG system 110 through the respective interfaces.

In some embodiments, the computing ecosystem 800 provides for the use of artificial intelligence to control and enhance the production of the AWG system 110. Current AWG systems 110 are generally controlled through the use of programable logic controllers, microcontrollers, or microprocessors. Generally, such systems are limited to inputs from local sensors and buttons on the system that are not extendable to artificial intelligence. The AWG system 110 of the computing ecosystem 800 may utilize artificial intelligence to process inputs from multiple sources to include local sensors, user demographics, historic water usage, location, and ambient weather, and/or the like to control when and how the machine should operate. Embodiments described herein use artificial intelligence to control the AWG system 110 for optimal use.

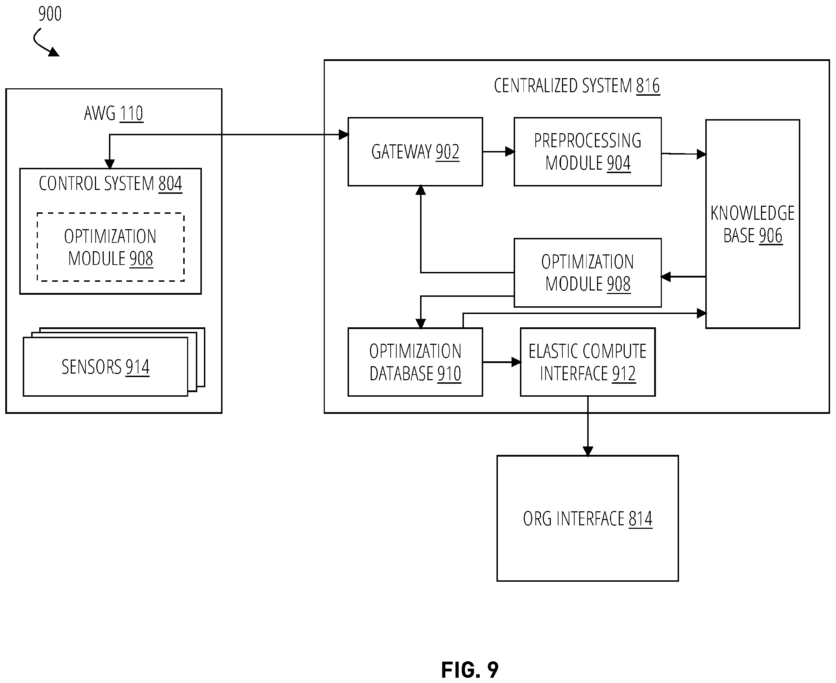

FIGS. 9-12 show schematics of example AWG computing ecosystem according to various embodiments.

FIG. 15 shows schematics of an example AWG computing ecosystem 900 including a centralized system 816, a control system 804, and an organizational interface 814. As shown, in some examples, the control system 804 may be integrated with the centralized system 816 (e.g., a cloud system) where artificial intelligence may be used to determine trends and optimize run times based, at least in part, on data collected from the control system 804 and/or one or more informational sources. In addition, or alternatively, the centralized system 816 may provide data collected from one or more informational sources, the organizational interface 814, and/or the like to the control system 804 where artificial intelligence may be used to determine trends and optimize run times based, at least in part, on data collected.

In various embodiments, an AWG system is deployed to an end user location that is associated with a unique local environment. The AWG system may include a control system 804 that may optimize run times of the AWG system based, at least in part, on data collected for the unique local environment. In addition, or alternatively, the control system 804 may include edge hardware and/or edge software deployed on the AWG system that enables communication with the centralized system 816 (e.g., cloud server). The centralized system 816 and/or the control system 804 may process data (e.g., via one or more cloud services, etc.) to generate trends, optimized energy outputs, and/or the like that be (i) leveraged by the control system 804 to control the operation of the AWG system, (ii) sent from the centralized system 816 to the control system 804 for optimization, and/or (iii) sent to an organizational interface 814 for reporting and/or other uses such as but not limited to data analysis, marketing, and local optimization for future designs and/or the like.

For example, the control system 804 and/or the centralized system 816 may include one or more portions of an optimization module 908. The optimization module 908 may include computer-readable instructions configured to generate one or more energy-based outputs (e.g., time-based energy predictions, optimized energy outputs, etc.) based, at least in part, on the one or more optimization inputs. The computer-readable instructions, for example, may define a machine learning, rule-based, and/or any other type of model configured to map a plurality of optimization inputs to an energy-based output. An energy-based output, for example, may include one or more time-based energy predictions and/or optimized energy outputs, such as real-time and/or scheduled operation instructions (e.g., run times, etc.) configured to initiate an operation of one or more components of an AWG system based, at least in part, on the one or more time-based energy predictions.

In various embodiments, the optimization module 908 may include an optimization machine learning model, such as one or more supervised, unsupervised, semi-supervised, reinforcement, and/or like learning models, which is configured to generate one or more energy-based outputs based, at least in part, on one or more optimization inputs. The optimization machine learning model, for example, may be previously trained using labeled and/or unlabeled training data reflective of a plurality of training optimization inputs. In some examples, the training data may include performance data (e.g., historical water outputs, etc.) from the AWG system 110 (e.g., recorded and/or transmitted by the control system 804 and/or centralized system 816) paired with a plurality of corresponding historical optimization inputs (e.g., recorded and/or transmitted by the control system 804 and/or centralized system 816). For instance, the performance data may include ground truth labels for the plurality of corresponding historical optimization inputs. In some examples, the optimization machine learning model may be continuously trained by recording performance data (e.g., real-time water outputs, etc.), generating training pairs by matching the performance data with corresponding optimization inputs, and retraining the optimization machine learning model, through one or more training techniques (e.g., backpropagation of errors, gradient descent, etc.) with the new training pairs. This may advantageously enable the dynamic consideration of new and/or modified optimization inputs over time.

In some embodiments, the control system 804 includes memory configured to store at least a portion of the optimization module 908. In addition, or alternatively, the control system 804 may include one or more edge devices that are communicatively connected, through one or more wireless networks, with the centralized system 816 that is configured to store, train, and/or implement the optimization module 908 on behalf of the control system 804. By way of example, the centralized system 816 may include a connected cloud platform including a distributed serverless cloud environment, a dedicated cloud server environment, and/or the like. In some examples, the centralized system 816 may train the optimization machine learning model and provide the trained model to the control system 804. In such a case, the control system 804 may locally implement the optimization machine learning model to locally generate one or more energy-based outputs. In addition, or alternatively, the control system 804 may provide one or more optimization inputs to the centralized system 816 and receive one or more energy-based outputs from the centralized system 816 based, at least in part, on the optimization inputs.

In some embodiments, the centralized system 816 includes a plurality of interconnected modules configured to perform one or more operations of the present disclosure. Specific communication within the centralized system 816 may take several forms and go through multiple steps to elucidate the desired outputs for the AWG system and/or the organizational interface 814.

In some example embodiments, the centralized system 816 may include gateway module 902. The gateway module 902 may include an Internet of Things (IoT) Gateway that allows for receiving optimization data and directing the optimization data to one or more other modules of the centralized system 816. In some embodiments, the centralized system 816 may include a preprocessing module 904 configured to perform one or more data cleaning and/or formatting operations to reformat the optimization data to an interpretable data format. The preprocessing module 904 may include a serverless function. In addition, or alternatively, the preprocessing module 904 may include a dedicated server tailored to the one or more data cleaning and/or formatting operations.

The preprocessed optimization data may be stored in a knowledge base 906. The knowledge base 906, for example, may include one or more memory device configured to store any type of data construct including, as examples, one or more graph data structures, relational databases, look up tables, and/or the like. In some examples, the knowledge base 906 may include a queryable database that is accessible to one or more other components of the centralized system 816 and/or control system 804, such as the optimization module 908. In some examples, the preprocessed optimization data may be temporarily stored in the knowledge base 906 and provided to another functional block for further use.

In some embodiments, the preprocessed data is used by the optimization module 908 to generate one or more optimized energy outputs for the AWG system 110. In addition, or alternatively, the preprocessed data may be leveraged to train one or more portions of the optimization module 908. For example, the optimization module 908 may include one or more machine learning algorithms that allow for the optimization of the AWG system's performance. In some examples, the preprocessed data may include training data for training the machine learning algorithms, as described herein.

During inference, the optimization module 908 may generate one or more optimized energy outputs based, at least in part, on at least a portion of the data from the optimization module 908. The one or more optimized energy outputs may be stored, for later querying, in an optimization database. In some examples, the one or more optimized energy outputs are returned to the knowledge base 906 (e.g., for later training and/or evaluation operations, etc.). In some examples, the one or more optimized energy outputs may be provided, via the gateway module 902, to the control system 804 for controlling one or more components of the AWG system 110.

In some examples, the optimization database 910 may include one or more data constructs, such as a relational database, graph database, and/or the like, that may be accessible, via an elastic compute interface 912, to one or more interfaces, such as the organizational interface 814. In this manner, optimization data collected by the centralized system 816 may be utilized in other applications such as increased weather monitoring, water usage trend research by location, demographic, use case, etc. For example, the optimization data may allow researchers and regulators to optimize suggestions or regulation around water to ensure best use, freedom of use, and/or regulation of water. In some examples, data may also be input to the centralized system 816, via the elastic compute interface 912, directly to the optimization database 910.

As described with reference to FIG. 9, optimization data may be collected from various systems, including one or more connected control systems, one or more informational source systems, one or more user interfaces, and/or the like. In some examples, the optimization data may include sensor data from the AWG system 110. For example, the control system 804 may record, using one or more sensors 914 of the AWG system 110, one or more real-time environmental attributes of its unique environment. The one or more sensors 914 may include one or more internal and/or external temperature sensors, gas sensors, pressure sensors, humidity sensors, wind sensors, weight sensors, and/or the like.

In various embodiments, the sensor data may be reflective of an efficacy of one or more water generation operations (e.g., optimization data, etc.) at a particular time and/or location. For instance, the sensor data may be indicative of one or more ambient environment attributes, such as a temperature, ambient pressure, CO₂ concentration, relative humidity, cloud coverage, wind speed and direction irradiation, internal and external water tank levels, conductivity of water, and/or the like. In some examples, the sensor data may be time-stamped to reflect a time and date corresponding to the recorded ambient environment attributes. In some examples, the optimization data (and/or one or more derivatives thereof that are reflective of the real-time environmental attributes) may be provided to centralized system 816 and/or a locally stored optimization module to generate one or more time-based energy predictions.

In various embodiments, the sensor data may be reflective of one or more water usage requirements (e.g., water usage data, etc.) at a particular time and/or location. For instance, the sensors 914 include one or more environment sensors within an at least partially controlled environment, such as a greenhouse (e.g., shown herein with reference to FIGS. 4-7). By way of example, the sensors 914 may include one or more sensors within a growth medium of the growth habitat and/or any other sensors in communication with an environment control system. In some examples, the water usage requirements may be based, at least in part, on a humidity level (e.g., measured by one or more environmental humidity sensors, etc.), a soil moisture level (e.g., measured by one or more growth medium sensors, etc.), plant growth rates and/or plant states (e.g., measured by one or more video and/or image sensors, etc.), opacity of solar canopies (e.g., opacity sensors within solar canopies), and/or the like. In some examples, the water usage data (and/or one or more derivatives thereof) may be provided to the centralized system 816 and/or a locally stored optimization module to generate one or more optimized energy outputs.

In various embodiments, the sensor data may be reflective of an energy capacity of an environment at a particular time and/or location. By way of example, the sensors 914 (e.g., the one or more environment sensors, etc.) may be configured to record energy usage data with respect to one or more electronic devices within the environment. As examples, energy usage data may include an energy expenditure of one or more robotic devices (e.g., planter robots within a greenhouse, etc.), one or more lighting devices (e.g., LEDs, etc.), one or more climate control devices (e.g., heating, ventilation, and air conditioning units, etc.).

In some embodiments, the sensor data may be reflective of a performance (e.g., performance data, etc.) of an AWG system 110 at a particular time and/or location. For instance, the performance data may be based on a water output of the AWG system 110. The one or more sensors 914 may include one or more water output measurement devices (e.g., flow measurement sensors, weight scales, etc.) that may measure and record a current, weight, and/or amount of water collected by the AWG system 110. In some examples, the performance data may include time-stamped performance data to enable a direct comparison of the performance data to time-stamped optimization data. In this manner, performance data from the local system sensors 914 on the AWG system 110 may be leveraged in a recursive manner to allow the optimization module 908 to constantly improve.

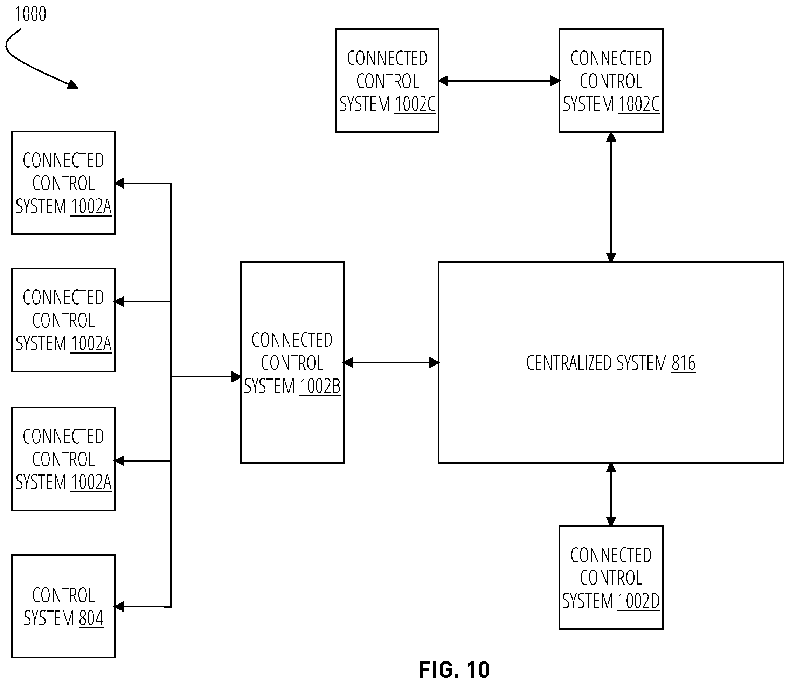

In various embodiments, the optimization data, the water usage data, the energy usage data, and/or the performance data locally recorded by the one or more sensors 914 may be combined with data from external sources to generate holistic energy-based outputs for optimizing the AWG system 110. For example, as described with reference to FIGS. 10-12, the local data received from the control system 804 for a local environment may be augmented by external data sourced from a plurality of external systems to improve the optimized control of the AWG system 110.

FIG. 16 shows schematics of an example AWG computing ecosystem 900 including a centralized system 816, a control system 804, and a plurality of connected control systems 902A-D. By way of example, the plurality of connected control systems 902A-D may correspond to a plurality of AWG systems that may be linked together to form an intelligent cluster of systems. In some examples, the intelligent cluster of systems may be based, at least in part, on a proximity of location to increase the data gathered to allow for greater optimization.

In some embodiments, a plurality of connected control systems 902A-D with edge capabilities may communicate data back and forth. Communication may be done via one or more network interfaces (e.g., Bluetooth^{®}, wireless fidelity (WiFi) networks, etc.). In some examples, a control system 804 may include one of a plurality of connected control systems 902A-D within an intelligent cluster.

In some examples, an intelligent cluster may form one or more hierarchical relationships. For examples, a first connected control system 902B may act as a leader hub and collect data from the control system 804 and/or one or more other connected control systems 902A. In some examples, the one or more hierarchical relationships may include location-based relationship. For instance, the first connected control system 902B may act as a leader hub for a plurality of connected control systems 902A within a threshold distance (e.g., within 100-foot radius forming an informational network hub, etc.) from the first connected control system 902B. Other connected control systems 902C and 902D that are outside of the threshold distance may form one or more other hierarchical relationships.

Each of the hierarchical relationships may facilitate communication between the centralized system 816 and each of the dependent control systems of the particular relationship. For instance, the connected control system 902B may be configured to relay optimization data and/or optimized energy outputs between the control system 804 and/or connected control systems 902A and the centralized system 816.

In some examples, the first connected control system 902B may be determined as the control system with the most amount of other system connections. In certain embodiments, an extension of the network may be accomplished through a chain network having several hub units send data to a single hub unit which then sends the data to the centralized system 816. In this manner, data may be aggregated from across a plurality of connected control systems 902B to reduce the data footprint going to the centralized system 816 from control systems that would not be within the threshold distance of another connected control system 902B. Each of the control systems may also receive data from the centralized system 816 for optimization to be sent to all other control systems as updates to operating procedures.

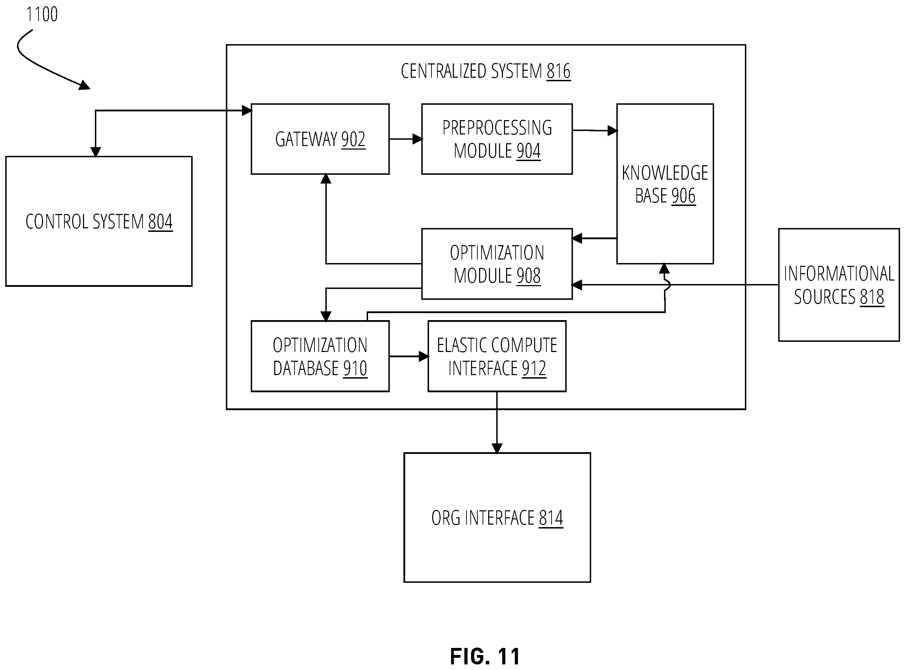

FIG. 11 shows schematics of an example AWG computing ecosystem 1100 including a centralized system 816, a control system 804, and one or more informational sources 818.

In some embodiments, the informational sources 818 may include one or more weather sources, one or more water usage sources, and/or the like. The weather sources, for example, may include one or more real-time and/or forecasting services (e.g., weather stations, etc.) accessible through one or more application programming interfaces (API). The one or more real-time and/or forecasting services may provide recorded local ambient conditions, forecasted weather conditions, and/or the like. In some examples, historical weather data may be stored as training data for the optimization module 908.

In addition, or alternatively, the informational sources 818 may include one or more local water usage sources, such as one or more smart home devices configured to sense and record water usage from various water sources within an environment. The local water usage sources may be accessible through one or more APIs and may provide real-time, historical, and/or projected water requirements for an environment that are reflective of an average and/or expected water usage of one or more users within the environment. In some examples, the water usage data may be time stamped to reflect a corresponding time of day, day of week, month, and/or the like.

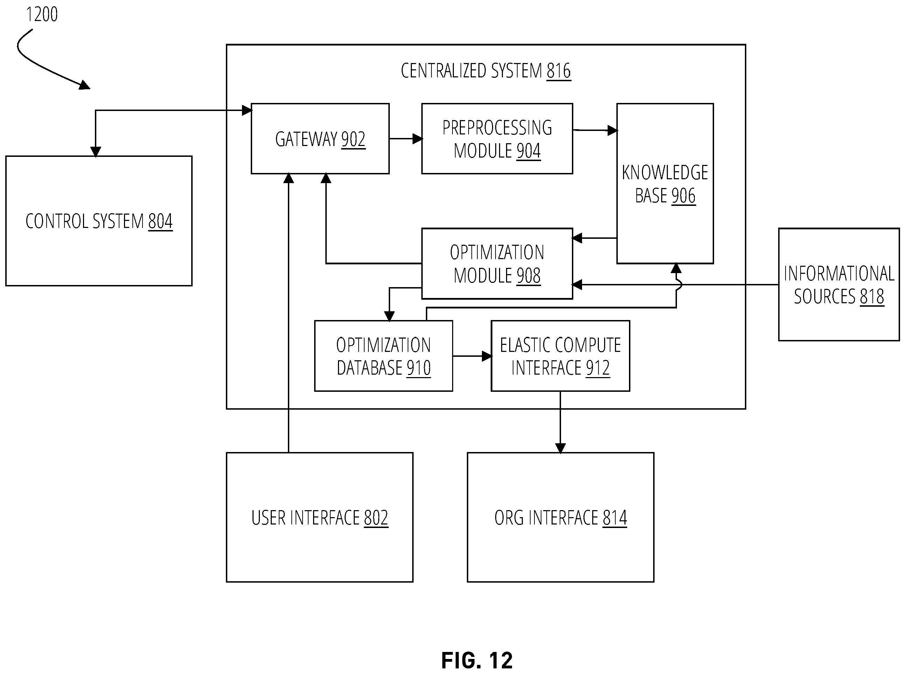

FIG. 12 shows schematics of an example AWG computing ecosystem 1200 including a centralized system 816, a control system 804, one or more informational sources 818, and one or more user interfaces 802.

In some embodiments, the user interfaces 802 include one or more interfaces between (i) the centralized system 816 and (ii) user devices associated with end users of a control system 804. In some examples, the end users may provide one or more optimization inputs, such as habitual water usage at certain times, electrical pricing, electrical sources (e.g., solar, wind, grid, generator), and/or the like, to tailor optimized energy outputs to one or more known criteria. In some examples, the user inputs may be input directly to the centralized system 816. For example, an end user may leverage the user interface 802 to input data such as, demographic information, age, sex, weight, height, water usage at different times, number of occupants, number of sinks, number of toilets, number of showers, sprinkler usage, size of end user storage tank, and/or other user data to tailor optimized energy outputs to maintenance issues, current machine performance, historical usage, and/or the like.

### Example Optimized Control Process

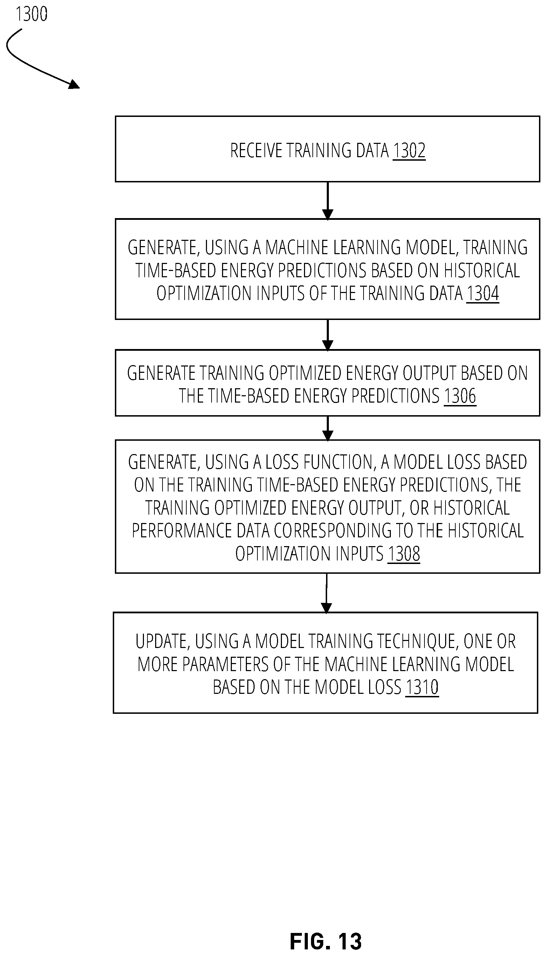

FIG. 13 is a flowchart showing an example training process 1300 for generating an optimization machine learning model in accordance with some embodiments discussed herein. The flowchart depicts a training process 1300 for improving the performance of AWG systems. The process 1300 may be implemented by one or more computing devices, entities, and/or systems described herein. For example, via the various steps/operations of the process 1300, a computing system, such as the control system 804, the centralized system 816, and/or a combination thereof, may leverage improved machine learning techniques to generate predictive energy insights tailored to an AWG system. By doing so, the process 1300 enables the automated, adaptable, and real-time control of an AWG system that is tailored to a unique environment.

FIG. 13 illustrates an example process 1300 for explanatory purposes. Although the example process 1300 depicts a particular sequence of steps/operations, the sequence may be altered without departing from the scope of the present disclosure. For example, some of the steps/operations depicted may be performed in parallel or in a different sequence that does not materially impact the function of the process 1300. In other examples, different components of an example device or system that implements the process 1300 may perform functions at substantially the same time or in a specific sequence.

In some embodiments, the process 1300 includes, at step/operation 1302, receiving training data for a machine learning model. For example, a computing system may receive training data for an optimization machine learning model.

The optimization machine learning model may include parameters, hyper-parameters, and/or defined operations of a rules-based and/or machine learning model (e.g., model including at least one of one or more rule-based layers, one or more layers that depend on trained parameters, coefficients, and/or the like). The optimization machine learning model, for example, may include one or more machine learning models that are trained to generate a time-based energy prediction and/or optimized energy output for an AWG system. The optimization machine learning model may include one or more of any type of machine learning model including one or more supervised, unsupervised, semi-supervised, and/or reinforcement learning models. In some embodiments, the optimization machine learning model may include multiple sub-models configured to perform one or more different stages of a prediction process.

In some examples, the optimization machine learning model may include one or more classification and/or regression models that may include one or more neural networks, decision trees, logistic regression, state vector machines, and/or the like. In some examples, the optimization machine learning model may be trained using one or more supervisory training techniques, such as back propagation of errors, gradient descent, and/or the like. In some examples, the optimization machine learning model is trained to optimize a loss function configured to optimize the performance of an AWG system by minimizing an amount of energy expended while achieving one or more water requirements of a location associated with the AWG system. In some examples, the loss function may be used with labelled training data to improve the model's performance.

In some embodiments, the training data may include a plurality of labeled optimization training entries. Each of the plurality of labeled optimization training entries may include a set of historical optimization inputs and a ground truth label corresponding to the set of historical optimization inputs. In some examples, the ground truth label may include performance data. For instance, the performance data may be indicative of a ground truth water output from the AWG system based, at least in part, on one or more historical atmospheric water generation operations. In addition, or alternatively, ground truth label may include energy usage data. For instance, the energy usage data may be indicative of a ground truth energy expense from the AWG system based, at least in part, on the one or more historical atmospheric water generation operations.

In some embodiments, the process 1300 includes, at step/operation 1304, generating, using the machine learning model, one or more training time-based energy predictions based, at least in part, on a set of historical optimization inputs from the training data. For example, the computing system may input the set of historical optimization inputs to the optimization machine learning model and receive, as an output from the optimization machine learning model, one or more training time-based energy predictions.

In some examples, the one or more training time-based energy predictions are output by a first sub-model of the optimization machine learning model. For example, the training time-based energy predictions may include one or more intermediate outputs for a second sub-model of the optimization machine learning model. In addition, or alternatively, the training time-based energy predictions may include a final output of the optimization machine learning model.

In some embodiments, the process 1300 includes, at step/operation 1306, generating one or more training optimized energy outputs based, at least in part, on the time-based energy predictions. For example, the computing system may generate the one or more training optimized energy outputs based, at least in part, on the time-based energy predictions.

In some embodiments, the optimization machine learning model may generate the training optimized energy outputs. For example, the one or more training optimized energy outputs may be output by a second sub-model of the optimization machine learning model. For example, the optimization machine learning model may include a plurality of machine learning models that are trained end-to-end to generate an optimized energy output based, at least in part, on one or more optimization inputs.

In addition, or alternatively, the training optimized energy outputs may be generated by a subsequent model based, at least in part, on the time-based energy predictions. For example, the subsequent model may include one or more rule-based models configured to apply one or more optimized rules to the one or more training optimized energy outputs and water usage data for an AWG system. The optimized rules, for example, may include one or more statistical models for deriving optimal run times of the AWG system and/or optimal run parameters based, at least in part, on the time-based energy predictions and one or more water requirement for a location associated with the AWG system.

In some embodiments, the process 1300 includes, at step/operation 1308, generating, using a loss function, a model loss based, at least in part, on the training time-based energy predictions, the training optimized energy output, and/or historical performance data corresponding to the historical optimization inputs. For example, the computing system may generate, using the loss function, the model loss for the optimization machine learning model.

The loss function, for example, may include any type of supervisory loss function, including Huber loss, cross-entropy loss, mean-square error, and/or the like. For instance, the loss function may measure an error between (i) the training time-based energy predictions and (ii) one or more ground truth water outputs and/or energy expenses. For example, the optimization machine learning model, and/or a first sub-model thereof, may be trained to reduce the loss (e.g., prediction error) between a prediction and a ground truth corresponding to the prediction to improve the predictive accuracy of the model.

In some examples, the loss function may include a reinforcement learning function, such as a greedy algorithm, and/or the like. For instance, the loss function may focus on measuring the overall reward for an optimized energy output based, at least in part, on the ground truth water outputs and/or energy expenses. For example, the reinforcement learning function may be configured to reward (i) higher water outputs (e.g., expenses over a threshold, etc.), (ii) lower energy expenses (e.g., expenses under a threshold, etc.), and/or (iii) an achievement of one or more water requirements. In addition, or alternatively, the reinforcement learning function may be configured to penalize (i) lower water outputs (e.g., expenses under a threshold, etc.), (ii) higher energy expenses (e.g., expenses over a threshold, etc.), and/or (iii) an achievement of one or more water requirements.

In some embodiments, the process 1300 includes, at step/operation 1310, updating, using a model training technique, one or more parameters of the machine learning model based, at least in part, on the model loss. For example, the computing system may update, using the model training technique, one or more parameters of the optimization machine learning model based, at least in part, on the model loss. The model training technique may include any type of model training technique including backpropagation of errors, gradient descent, and/or the like.

In some examples, the optimization machine learning model may include one or more sub-models. The one or more sub-models may be trained at least partially end-to-end using a first model loss, such as a reinforcement learning loss output by a reinforcement learning function. In addition, or alternatively, (i) a first sub-model, such as a prediction sub-model configured to output one or more time-based energy predictions, may be at least partially individually trained using a first model loss, such as a supervisory learning loss output by a supervisory loss function and (ii) a second sub-model, such as an optimization sub-model configured to output one or more optimized energy outputs, may be at least partially individually trained using a second model loss, such as a reinforcement learning loss output by a reinforcement loss function.

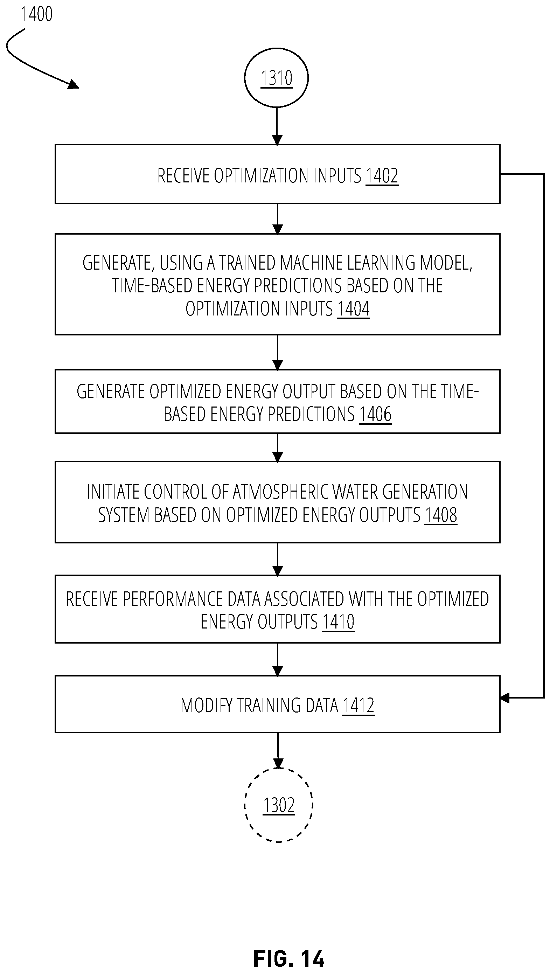

FIG. 14 is a flowchart showing an example control process 1400 for optimally controlling an AWG system using a trained optimization machine learning model in accordance with some embodiments discussed herein. The flowchart depicts a control process 1400 for improving the performance of AWG systems. The process 1400 may be implemented by one or more computing devices, entities, and/or systems described herein. For example, via the various steps/operations of the process 1400, a computing system, such as the control system 804, the centralized system 816, and/or a combination thereof, may leverage improved machine learning techniques to generate predictive energy insights tailored to an AWG system. By doing so, the process 1400 enables the automated, adaptable, and real-time control of an AWG system that is tailored to a unique environment.

FIG. 14 illustrates an example process 1400 for explanatory purposes. Although the example process 1400 depicts a particular sequence of steps/operations, the sequence may be altered without departing from the scope of the present disclosure. For example, some of the steps/operations depicted may be performed in parallel or in a different sequence that does not materially impact the function of the process 1400. In other examples, different components of an example device or system that implements the process 1400 may perform functions at substantially the same time or in a specific sequence.

The process 1400 may begin at step/operation 1310 of process 1300, where the process 1300 include updating one or more parameters of a machine learning model to generate a trained machine learning model. In some embodiments, the trained machine learning model may be stored in memory and retrieved, called, and/or otherwise accessed to perform one or more steps/operations of the process 1400. In addition, or alternatively, the trained machine learning model may be provided to another computing system (e.g., a control system, etc.,) for use in performing the one or more steps/operations of the process 1400.

For example, the steps/operations of the process 1400 may be performed by a control system of an AWG system that includes one or more controllers electrically connected to one or more subsystems (e.g., humidity increasing system, the air preconditioning system, the power generation module, one or more valves (e.g., electromechanical mixing valves, etc.), motors, actuators, heat condensers, etc.) of the AWG system and the control system configured to interact with the one or more controller to control the operation of the AWG system. In addition, or alternatively, the steps/operations of the process 1400 may be performed by a centralized system and the control system of the AWG system may act as an edge device connecting the AWG system to the centralized system.

In some embodiments, the process 1400 includes, at step/operation 1402, receiving one or more optimization inputs. For example, a computing system may receive the one or more optimization inputs. The one or more optimization inputs, for example, may correspond to a time and/or a location associated with an operation of an AWG system. In certain embodiments, the optimization inputs may comprise data generated by the AWG system and/or data generated by third-party systems (e.g., third-party weather prediction system). In some embodiments, the optimization inputs may comprise data indicative of a likely effectiveness of the AWG system in generating water (e.g., weather and/or location data indicating a likely efficiency of the producing water from air). In some embodiments, the optimization inputs may alternatively or additionally comprise data indicative of a water need (e.g., data indicating a moisture level of soil within a greenhouse attached to the AWG system). In some embodiments, the optimization inputs indicative of a water need may be weighted more or less heavily than data indicative of a likely efficiency of water production.

The optimization inputs may include one or more real-time, historical, forecasted, and/or static inputs. For example, the real-time inputs may be indicative of a current performance, current water usage, and/or current environmental conditions associated with an AWG system. The one or more historical inputs may include one or more historical performance, water usage, and/or environmental condition trends associated with the AWG system. The one or more forecasted input may include one or more forecasted performance, water usage, and/or environmental condition trends associated with the AWG system. The one or more static inputs may include one or more user defined metrics that may be reflective of a performance, water usage, and/or environmental conditions associated with the AWG system. By way of example, some optimization inputs may include local current machine sensor data, historical machine sensor data, historical water usage, user demographics, user applications, location of AWG system, historical weather patterns, projected weather forecasts, rain fall, fog conditions, and/or the like.

In some examples, the optimization inputs may be aggregated from a plurality of different sources of information and streamed to the computing system. For example, the optimization inputs may include one or more AWG system inputs, connected AWG system inputs, informational source inputs, organization inputs, and/or user inputs.

For example, the one or more optimization inputs may include local sensor data from the AWG system. The AWG system inputs, for example, may include local sensor data recorded by one or more sensors of the AWG system. The local sensor data, for example, may be reflective of a performance (e.g., water output, energy usage, etc.) of the AWG system, one or more local environmental conditions (e.g., temperature, humidity, etc.), and/or the like.

By way of example, the local sensor data may include local optimization data, water usage data, energy usage data, performance data, and/or the like that are reflective of one or more attributes of the AWG system and/or an associated environment (e.g., a controlled environment, such as a greenhouse). The local optimization data, for example, may be reflective of an efficacy of one or more water generation operations at a particular time and/or location, such as one or more ambient environment attributes, and/or the like. The water usage data may be reflective of one or more water usage requirements, such as a humidity level, a soil moisture level, plant growth rates and/or plant states, opacity of solar canopies, and/or the like, within an environment. The energy usage data may be reflective of an energy capacity of an environment, such as an energy expenditure of one or more robotic devices (e.g., planter robots within a greenhouse, etc.), one or more lighting devices (e.g., LEDs, etc.), one or more climate control devices (e.g., heating, ventilation, and air conditioning units, etc.), and/or the like. The performance data may be reflective of a water output of the AWG system, such as an amount of water collected by the AWG system.

As another example, the AWG system may be associated with a cluster of a plurality of connected AWG systems. Each of the plurality of connected AWG systems may be associated with a different location. In some examples, the one or more optimization inputs may include remote sensor data from each of the plurality of connected AWG systems. For example, the connected AWG system inputs may include remote sensor data recorded by one or more sensors of one or more connected AWG systems within a cluster of connected AWG systems. The remote sensor data, for example, may be reflective of a performance (e.g., water output, energy usage, etc.) of a respective AWG system, one or more remote environmental conditions (e.g., temperature, humidity, etc.) at a location of a respective AWG system, and/or the like.

As yet another example, the one or more optimization inputs may include current weather data and/or prospective weather data from one or more external informational sources. The informational source inputs, for example, may include real-time, historical, and/or forecasted information recorded, generated, and/or maintained by one or more informational sources. The informational sources, for example, may include a weather forecasting service and the informational source inputs may be reflective of one or more real-time, historical, and/or forecasted weather conditions (e.g., humidity, temperature, precipitation, etc.) at a location corresponding to the AWG system.

The organization inputs and/or user inputs may include preset and/or dynamically modified, user-defined parameters for an AWG system. The inputs may be reflective of a required water usage, an available energy output, one or more facility characteristics (e.g., a number of toilets, sinks, people, etc.), and/or any other information that may tailor the performance of the AWG system to a particular environment.

In some embodiments, the process 1400 includes, at step/operation 1404, generating, using a trained machine learning model, one or more time-based energy predictions based, at least in part, on the one or more optimization inputs. For example, the computing system may generate, using the optimization machine learning model, the one or more time-based energy predictions for the AWG system based, at least in part, on the one or more optimization inputs. In some examples, the optimization machine learning model may be previously trained, using one or more supervisory training techniques (e.g., back-propagation of errors, etc.), based, at least in part, on a training dataset that includes a plurality of labeled optimization training entries.

A time-based energy prediction may be reflective of a forecasted energy expenditure of the AWG system for generating water at and/or during a particular time period. In some examples, the time-based energy prediction may reflect a ratio of energy to water output at and/or during the particular time period. For instance, a time-based energy prediction may be indicative of a threshold amount of energy to achieve a particular water output at and/or during the particular time period. In some examples, the time-based energy prediction may reflect a forecasted maximum achievable water output at and/or during the particular time period.

In some examples, one or more time-based energy predictions may be generated for one or more different time periods. For example, the one or more time-based energy predictions may include a current time-based energy prediction for a current time period and one or more subsequent time-based energy predictions for one or more prospective time periods temporally subsequent to the current time period. In some examples, the one or more time-based energy predictions may allow the computing system to generate a water-generation to energy-expenditure picture for the location associated with the AWG system. The water-generation to energy-expenditure picture may be reflective of a ratio of energy to water generation across one or more time periods and/or locations associated with the AWG system and/or one or more connected systems. In some examples, the water-generation to energy-expenditure picture may be rendered within a user interface (see user interface and organizational interfaces of FIGS. 8-9 and 11-12). For example, data indicative of the ratios of energy to water generation across one or more time periods and/or locations may be provided (and/or accessed by) one or more user computing entities. In some examples, the ratios of energy to water generation may plotted across an interactive timeline that may be rendered via the one or more user interfaces of the user computing entities.

In some embodiments, the process 1400 includes, at step/operation 1406, generating one or more optimized energy outputs based, at least in part, on the time-based energy predictions. For example, the computing system may generate the optimized energy output based, at least in part, on the time-based energy predictions. In some examples, the computing system may generate the optimized energy output for the AWG system based, at least in part, on the one or more time-based energy predictions and water usage data for the location corresponding to the AWG system.

The water usage data, for example, may include and/or be determined using one or more of the optimization inputs. For example, the water usage data may be based, at least in part, on user input or sensor data from the AWG system, the one or more connected AWG systems, the one or more interfaces (e.g., user, organizational, etc.), and/or one or more informational sources.

In some examples, the one or more optimization inputs may be leveraged to generate water usage data reflective of water usage trends for the location associated with the AWG system. In this manner, a water usage picture of the location may be built that is reflective of time-based water requirements for the location associated with the AWG system. In some examples, the optimized energy output may be based, at least in part, on a comparison between the time-based water requirements and/or the time-based energy predictions. For example, an optimized energy output may include one or more recommended control instructions for optimizing the operation of the AWG system to operate at the best times of a day, week, year, etc. to achieve the highest volume of water at the lowest possible input energy, while achieving the water requirement of a particular location.

An optimized energy output, for example, may identify one or more optimal run times for collecting water using the AWG system. As one example, the one or more optimization inputs may reflect high current humidity for a current week and a low forecasted humidity for a subsequent week temporally subsequent to the current week. In such a case, the optimized energy output may identify the current week as an optimal run time for collected water to achieve the water requirement of both the current and subsequent week. In some examples, the output may be generated by balancing the humidity data with other optimization inputs, such as water usage data, water tank levels, electricity prices, and/or the like. In this manner, the computing system may be able to maximize the available water during the low humidity conditions when the production efficiency of the system will be low (e.g., as reflected by the time-based energy predictions, etc.).

In some embodiments, the optimized energy outputs may modify one or more run parameters for one or more run times. For instance, the optimized energy outputs may include optimal run parameters for a current and/or scheduled run time. In some examples, the optimal run parameters may be associated with one or more operational states (e.g., a standby state, low energy state, high energy state, and/or like) to limit one or more energy expenditures of the AWG system during a particular time period. As another example, the optimal run parameters may include one or more run time operational thresholds and/or conditions. For instance, the one or more run time operational thresholds and/or conditions may reflect one or more temperature ranges for components of the AWG system, such as in-line heaters (e.g., for heating a desiccant), one or more valve control time constraints (e.g., particularly for batch-style AWG systems), one or more valve positioning constraints (e.g., if the desiccant can be directed to through one or more optional fluid pathways), and/or the like.

In some embodiments, the optimized energy output is generated by applying one or more rule-based models to the time-based energy predictions and/or water usage data. In addition, or alternatively, the optimized energy output may be generated using one or more machine learning techniques. For example, in some embodiments, the optimized energy output may be generated by a sub-model of the optimization machine learning model. By way of example, the one or more time-based energy predictions may be generated by a first sub-model of the optimization machine learning model as an intermediary output. The intermediate output may then be processed by a second sub-model to generate the optimized energy output. In this manner, the optimization machine learning model may include an improved machine learning architecture that breaks up the traditionally complex optimization methods into a sequence of connected machine leaning models.

In some embodiments, the process 1400 includes, at step/operation 1408, initiating control of the AWG system based, at least in part, on the optimized energy outputs. For example, the computing system may initiate control of the AWG system based, at least in part, on the optimized energy outputs. For example, the computing system may generate the one or more control instructions based, at least in part, on the optimized energy output and/or time-based energy predictions. In some examples, the computing system may communicate the one or more control instructions to one or more controllers of the AWG system to initiate one or more atmospheric water generation operations based, at least in part, on the one or more time-based energy predictions, optimized energy outputs, and/or the like. In this manner, data aggregated from a plurality of sources (e.g., optimization inputs, etc.) may be used to optimize the run time of the AWG system.

In some embodiments, the process 1400 includes, at step/operation 1410, receiving performance data associated with the optimized energy outputs. For example, the computing system may receive the performance data associated with the optimized energy outputs and/or time-based energy predictions. For example, the computing system may receive energy usage data and/or performance data corresponding to one or more atmospheric water generation operations performed based, at least in part, on the optimized energy outputs and/or time-based energy predictions. The performance data, for example, may be indicative of a volume of water output by the AWG system in response to the atmospheric water generation operations. The energy usage data may be indicative of an amount of energy expended to perform the atmospheric water generation operations.

In some embodiments, the process 1400 includes, at step/operation 1412, modifying training data based, at least in part, on the performance data. For example, the computing system may modify the training data based, at least in part, on the performance data. For example, the computing system may store the one or more optimization inputs, the energy usage data, and the performance data as a labeled optimization training entry in the training dataset. In some examples, the optimization training entry may also include the one or more time-based energy predictions and/or the optimized energy output.

In some embodiments, the process 1400 may then return step/operation 1302 to retrain the optimization machine learning model. For example, the computing system may iteratively perform one or more steps/operations of the process 1300 to recursively update the optimization machine learning model based, at least in part, on the performance of an AWG system over time. As a particular example, the computing system may retrain the optimization machine learning model based, at least in part, on the labeled optimization training entry generated using the steps/operations of the process 1400. In this manner the optimization of the AWG system may improve with running the machine. In some cases, to improve the learning of the machine, an end user may input interruption periods where the data will not be used in the machine learning model such as times when the end user will not be consistently using water as they normally would. In time, the machine learning model may learn and adapt to these interruption periods based, at least in part, on the user input and recorded water usage data during the period of interruption.

### Conclusion

Many modifications and other embodiments will come to mind to one skilled in the art to which this disclosure pertains having the benefit of the teachings presented in the foregoing descriptions and the associated drawings. Therefore, it is to be understood that the disclosure is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A computer-implemented method comprising:
receiving, by one or more processors (808), one or more optimization inputs for a time and a location associated with an operation of an atmospheric water generation system (110; 600), wherein the atmospheric water generation system comprises a system for extracting water vapor from atmospheric source air at least in part by condensing water vapor from the atmospheric air using a desiccant flow path loop;
generating, by the one or more processors and using an optimization machine learning model, one or more time-based energy predictions for the atmospheric water generation system based at least in part on the one or more optimization inputs; and
communicating, by the one or more processors, one or more control instructions to one or more controllers (812) of the atmospheric water generation system to initiate one or more atmospheric water generation operations based at least in part on the one or more time-based energy predictions, wherein the one or more time-based energy predictions comprise a forecasted energy expenditure and water output of the atmospheric water generation system.

2. The computer-implemented method of claim 1, wherein the optimization machine learning model is previously trained, using one or more supervisory training techniques, based at least in part on a training dataset comprising a plurality of labeled optimization training entries and each of the plurality of labeled optimization training entries comprises a set of historical optimization inputs and historical performance data corresponding to the set of historical optimization inputs.

3. The computer-implemented method of claim 2, wherein the historical performance data is indicative of a ground truth water output from the atmospheric water generation system based at least in part on one or more historical atmospheric water generation operations.

4. The computer-implemented method of claim 2 or 3, further comprising:
receiving, by the one or more processors, energy usage data and performance data corresponding to the one or more atmospheric water generation operations; and
storing, by the one or more processors, the one or more optimization inputs, the energy usage data, and the performance data as a labeled optimization training entry in the training dataset,
wherein, optionally, the computer-implemented method further comprises:
retraining, by the one or more processors, the optimization machine learning model based at least in part on the labeled optimization training entry.

5. The computer-implemented method of any of the preceding claims, further comprising:
generating, by the one or more processors, an optimized energy output for the atmospheric water generation system based at least in part on the one or more time-based energy predictions and water usage data for the location corresponding to the atmospheric water generation system; and
generating, by the one or more processors, the one or more control instructions based at least in part on the optimized energy output,
wherein, optionally, the water usage data is based, at least in part, on user input or sensor data from the atmospheric water generation system.

6. The computer-implemented method of any of the preceding claims, wherein the one or more optimization inputs comprise sensor data from the atmospheric water generation system, wherein, optionally, the one or more optimization inputs comprise current weather data or prospective weather data from one or more external informational sources.

7. The computer-implemented method of any of the preceding claims, wherein the atmospheric water generation system is associated with a cluster of a plurality of connected atmospheric water generation systems, each of the plurality of connected atmospheric water generation systems are associated with a different location, and the one or more optimization inputs comprise remote sensor data from each of the plurality of connected atmospheric water generation systems.

8. The computer-implemented method of any of the preceding claims, wherein communicating the one or more control instructions comprises:
providing, by the one or more processors, the one or more control instructions to an edge device that is (i) physically disposed on the atmospheric water generation system and (ii) electrically connected to at least one of the one or more controllers of the atmospheric water generation system.

9. A computing system (804; 816) comprising memory (806) and one or more processors (808) communicatively coupled to the memory, the one or more processors configured to:
receive one or more optimization inputs for a time and a location associated with an operation of an atmospheric water generation system (110; 600), wherein the atmospheric water generation system comprises a system for extracting water vapor from atmospheric air at least in part by condensing water vapor from the atmospheric air using a desiccant flow path loop;
generate, using an optimization machine learning model, one or more time-based energy predictions for the atmospheric water generation system based at least in part on the one or more optimization inputs; and
communicate one or more control instructions to one or more controllers (812) of the atmospheric water generation system to initiate one or more atmospheric water generation operations based at least in part on the one or more time-based energy predictions, wherein the one or more time-based energy predictions comprise a forecasted energy expenditure and water output of the atmospheric water generation system.

10. The computing system of claim 9, wherein the optimization machine learning model is previously trained, using one or more supervisory training techniques, based at least in part on a training dataset comprising a plurality of labeled optimization training entries and each of the plurality of labeled optimization training entries comprises a set of historical optimization inputs and performance data corresponding to the set of historical optimization inputs.

11. The computing system of claim 10, wherein the performance data is indicative of a ground truth water output from the atmospheric water generation system based at least in part on one or more historical atmospheric water generation operations.

12. The computing system of any of claims 9 to 11, wherein the one or more processors are further configured to:
generate an optimized energy output for the atmospheric water generation system based at least in part on the one or more time-based energy predictions and water usage data for the location corresponding to the atmospheric water generation system; and
generate the one or more control instructions based at least in part on the optimized energy output,
wherein, optionally, the water usage data is based, at least in part, on user input or sensor data from the atmospheric water generation system.

13. The computing system of any of claims 9 to 12, wherein the one or more optimization inputs comprise sensor data from the atmospheric water generation system, wherein, optionally, the one or more optimization inputs comprise current weather data or prospective weather data from one or more external informational sources.

14. The atmospheric water generation system, which comprises:
the one or more controllers, wherein the one or more controllers are electrically connected to one or more subsystems of the atmospheric water generation system; and
the computing system of any of claims 9 to 13.

15. The atmospheric water generation system of claim 14, wherein the atmospheric water generation system is associated with a cluster of a plurality of connected atmospheric water generation systems, each of the plurality of connected atmospheric water generation systems are associated with a different location, and the one or more optimization inputs comprise remote sensor data from each of the plurality of connected atmospheric water generation systems.

## Patentansprüche

1. Computerimplementiertes Verfahren, umfassend:
Empfangen, durch einen oder mehrere Prozessoren (808), einer oder mehrerer Optimierungseingaben für eine Zeit und einen Ort, die mit einem Betrieb eines atmosphärischen Wassererzeugungssystems (110; 600) assoziiert sind, wobei das atmosphärische Wassererzeugungssystem ein System zum Extrahieren von Wasserdampf aus atmosphärischer Quellluft mindestens zum Teil durch Kondensieren von Wasserdampf aus der atmosphärischen Luft unter Verwendung einer Trockenmittel-Strömungswegschleife umfasst;
Erzeugen, durch den einen oder mehrere Prozessoren und unter Verwendung eines Optimierungs-Maschinenlernmodells, einer oder mehrerer zeitbasierter Energievorhersagen für das atmosphärische Wassererzeugungssystem basierend mindestens zum Teil auf der einen oder mehreren Optimierungseingaben; und
Kommunizieren, durch den einen oder mehrere Prozessoren, einer oder mehrerer Steueranweisungen an eine oder mehrere Steuerungen (812) des atmosphärischen Wassererzeugungssystems, um einen oder mehrere atmosphärische Wassererzeugungsvorgänge basierend mindestens zum Teil auf der einen oder mehreren zeitbasierten Energievorhersagen einzuleiten, wobei die eine oder mehreren zeitbasierten Energievorhersagen einen prognostizierten Energieaufwand und eine prognostizierte Wasserabgabe des atmosphärischen Wassererzeugungssystems umfassen.

2. Computerimplementiertes Verfahren nach Anspruch 1, wobei das Optimierungs-Maschinenlernmodell zuvor unter Verwendung einer oder mehrerer Aufsichtstrainingstechniken basierend mindestens zum Teil auf einem Trainingsdatensatz, der eine Vielzahl von markierten Optimierungstrainingseinträgen umfasst, trainiert wird und jeder der Vielzahl von markierten Optimierungstrainingseinträgen einen Satz von historischen Optimierungseingaben und historischen Leistungsdaten, die dem Satz von historischen Optimierungseingaben entsprechen, umfasst.

3. Computerimplementiertes Verfahren nach Anspruch 2, wobei die historischen Leistungsdaten indikativ sind für eine wahre Grundwasserabgabe aus dem atmosphärischen Wassererzeugungssystem, die mindestens zum Teil auf einem oder mehreren historischen atmosphärischen Wassererzeugungsvorgängen basiert.

4. Computerimplementiertes Verfahren nach Anspruch 2 oder 3, ferner umfassend:
Empfangen, durch den einen oder mehrere Prozessoren, von Energieverbrauchsdaten und Leistungsdaten, die dem einen oder mehreren atmosphärischen Wassererzeugungsvorgängen entsprechen; und
Speichern, durch den einen oder mehrere Prozessoren, der einen oder mehreren Optimierungseingaben, der Energieverbrauchsdaten und der Leistungsdaten als einen markierten Optimierungstrainingseintrag in dem Trainingsdatensatz,
wobei, optional, das computerimplementierte Verfahren ferner umfasst:
Umtrainieren, durch den einen oder mehrere Prozessoren des Optimierungs-Maschinenlernmodells, basierend mindestens zum Teil auf dem markierten Optimierungstrainingseintrag.

5. Computerimplementiertes Verfahren nach einem der vorhergehenden Ansprüche, ferner umfassend:
Erzeugen, durch den einen oder mehrere Prozessoren, einer optimierten Energieabgabe für das atmosphärische Wassererzeugungssystem basierend mindestens zum Teil auf der einen oder mehreren zeitbasierten Energievorhersagen und Wasserverbrauchsdaten für den Ort, die dem atmosphärischen Wassererzeugungssystem entsprechen; und
Erzeugen, durch den einen oder mehrere Prozessoren, der einen oder mehreren Steueranweisungen basierend mindestens zum Teil auf der optimierten Energieabgabe,
wobei, optional, die Wasserverbrauchsdaten mindestens zum Teil auf Benutzereingabe oder Sensordaten aus dem atmosphärischen Wassererzeugungssystem basieren.

6. Computerimplementiertes Verfahren nach einem der vorhergehenden Ansprüche, wobei die eine oder mehreren Optimierungseingaben Sensordaten aus dem atmosphärischen Wassererzeugungssystem umfassen, wobei, optional, die eine oder mehreren Optimierungseingaben aktuelle Wetterdaten oder voraussichtliche Wetterdaten aus einer oder mehreren externen Informationsquellen umfassen.

7. Computerimplementiertes Verfahren nach einem der vorhergehenden Ansprüche, wobei das atmosphärische Wassererzeugungssystem mit einem Cluster einer Vielzahl von verbundenen atmosphärischen Wassererzeugungssystemen assoziiert ist, wobei jedes der Vielzahl von verbundenen atmosphärischen Wassererzeugungssystemen mit einem anderen Ort assoziiert ist und die eine oder mehreren Optimierungseingaben Remote-Sensordaten aus jedem der Vielzahl von verbundenen atmosphärischen Wassererzeugungssystemen umfassen.

8. Computerimplementiertes Verfahren nach einem der vorhergehenden Ansprüche, wobei das Kommunizieren der einen oder mehreren Steueranweisungen umfasst:
Bereitstellen, durch den einen oder mehrere Prozessoren, der einen oder mehreren Steueranweisungen an eine Peripherievorrichtung, die (i) physisch auf dem atmosphärischen Wassererzeugungssystem angeordnet und (ii) elektrisch mit mindestens einer von der einen oder mehreren Steuerungen des atmosphärischen Wassererzeugungssystems verbunden ist.

9. Rechensystem (804; 816), umfassend einen Speicher (806) und einen oder mehrere Prozessoren (808), die kommunikativ an den Speicher gekoppelt sind, wobei der eine oder mehrere Prozessoren konfiguriert sind zum:
Empfangen einer oder mehrerer Optimierungseingaben für eine Zeit und einen Ort, die mit dem Betrieb eines atmosphärischen Wassererzeugungssystems (110; 600) assoziiert sind, wobei das atmosphärische Wassererzeugungssystem ein System zum Extrahieren von Wasserdampf aus der atmosphärischen Luft mindestens zum Teil durch Kondensieren von Wasserdampf aus der atmosphärischen Luft unter Verwendung einer Trockenmittel-Strömungswegschleife umfasst;
Erzeugen, unter Verwendung eines Optimierungs-Maschinenlernmodells, einer oder mehrerer zeitbasierter Energievorhersagen für das atmosphärische Wassererzeugungssystem basierend mindestens zum Teil auf der einen oder mehreren Optimierungseingaben; und
Kommunizieren einer oder mehrerer Steueranweisungen an eine oder mehrere Steuerungen (812) des atmosphärischen Wassererzeugungssystems, um einen oder mehrere atmosphärische Wassererzeugungsvorgänge basierend mindestens zum Teil auf der einen oder mehreren zeitbasierten Energievorhersagen einzuleiten, wobei die eine oder mehreren zeitbasierten Energievorhersagen einen prognostizierten Energieverbrauch und eine prognostizierte Wasserabgabe des atmosphärischen Wassererzeugungssystems umfassen.

10. Rechensystem nach Anspruch 9, wobei das Optimierungs-Maschinenlernmodell zuvor unter Verwendung einer oder mehrerer Aufsichtstrainingstechniken, basierend mindestens zum Teil auf einem Trainingsdatensatz, der eine Vielzahl von markierten Optimierungstrainingseingaben umfasst, trainiert wird und jeder der Vielzahl von markierten Optimierungstrainingseinträgen einen Satz von historischen Optimierungseingaben und Leistungsdaten, die dem Satz von historischen Optimierungseingaben entsprechen, umfasst.

11. Rechensystem nach Anspruch 10, wobei die Leistungsdaten indikativ sind für eine wahre Grundwasserabgabe aus dem atmosphärischen Wassererzeugungssystem, die mindestens zum Teil auf einem oder mehreren historischen atmosphärischen Wassererzeugungsvorgängen basiert.

12. Rechensystem nach einem der Ansprüche 9 bis 11, wobei der eine oder mehrere Prozessoren ferner konfiguriert sind zum:
Erzeugen einer optimierten Energieabgabe für das atmosphärische Wassererzeugungssystem basierend mindestens zum Teil auf der einen oder mehreren zeitbasierten Energievorhersagen und Wasserverbrauchsdaten für den Ort, die dem atmosphärischen Wassererzeugungssystem entsprechen; und
Erzeugen der einen oder mehreren Steueranweisungen basierend mindestens zum Teil auf der optimierten Energieabgabe,
wobei, optional, die Wasserverbrauchsdaten mindestens zum Teil auf Benutzereingabe oder Sensordaten aus dem atmosphärischen Wassererzeugungssystem basieren.

13. Rechensystem nach einem der Ansprüche 9 bis 12, wobei die eine oder mehreren Optimierungseingaben Sensordaten aus dem atmosphärischen Wassererzeugungssystem umfassen, wobei, optional, die eine oder mehreren Optimierungseingaben aktuelle Wetterdaten oder voraussichtliche Wetterdaten aus einer oder mehreren externen Informationsquellen umfassen.

14. Atmosphärisches Wassererzeugungssystem, welches Folgendes umfasst:
die eine oder mehreren Steuerungen, wobei die eine oder mehreren Steuerungen elektrisch mit einem oder mehreren Subsystemen des atmosphärischen Wassererzeugungssystems verbunden sind; und
das Rechensystem nach einem der Ansprüche 9 bis 13.

15. Atmosphärisches Wassererzeugungssystem nach Anspruch 14, wobei das atmosphärische Wassererzeugungssystem mit einem Cluster einer Vielzahl von verbundenen atmosphärischen Wassererzeugungssystemen assoziiert ist, wobei jedes der Vielzahl von verbundenen atmosphärischen Wassererzeugungssystemen mit einem anderen Ort assoziiert ist und der eine oder mehrere Optimierungseingänge Remote-Sensordaten aus jedem der Vielzahl von verbundenen atmosphärischen Wassererzeugungssystemen umfassen.

## Revendications

1. Procédé mis en œuvre par ordinateur comprenant :
la réception, par un ou plusieurs processeurs (808), d'une ou plusieurs données d'entrée d'optimisation pour un temps et un emplacement associés à une opération d'un système de génération d'eau atmosphérique (110 ; 600), dans lequel le système de génération d'eau atmosphérique comprend un système destiné à extraire de la vapeur d'eau depuis l'air source atmosphérique au moins en partie par condensation de la vapeur d'eau de l'air atmosphérique à l'aide d'une boucle de trajet d'écoulement de dessiccant ;
la génération, par l'un ou plusieurs processeurs et à l'aide d'un modèle d'apprentissage automatique d'optimisation, d'une ou plusieurs prédictions d'énergie basées sur le temps pour le système de génération d'eau atmosphérique sur la base au moins en partie de l'une ou plusieurs données d'entrée d'optimisation ; et
la communication, par l'un ou plusieurs processeurs, d'une ou plusieurs instructions de commande à un ou plusieurs contrôleurs (812) du système de génération d'eau atmosphérique pour lancer une ou plusieurs opérations de génération d'eau atmosphérique sur la base au moins en partie de l'une ou plusieurs prédictions d'énergie basées sur le temps, dans lequel l'une ou plusieurs prédictions d'énergie basées sur le temps comprennent une dépense d'énergie et une sortie d'eau prévues du système de génération d'eau atmosphérique.

2. Procédé mis en œuvre par ordinateur selon la revendication 1, dans lequel le modèle d'apprentissage automatique d'optimisation est préalablement entraîné, à l'aide d'une ou plusieurs techniques d'apprentissage supervisé, sur la base au moins en partie d'un ensemble de données d'entraînement comprenant une pluralité d'entrées d'entraînement d'optimisation étiquetées et chacune de la pluralité d'entrées d'entraînement d'optimisation étiquetées comprend un ensemble de données d'entrée d'optimisation historiques et de données de performance historiques correspondant à l'ensemble de données d'entrée d'optimisation historiques.

3. Procédé mis en œuvre par ordinateur selon la revendication 2, dans lequel les données de performances historiques sont indicatives d'une sortie d'eau de réalité de terrain provenant du système de génération d'eau atmosphérique sur la base au moins en partie d'une ou plusieurs opérations de génération d'eau atmosphérique historiques.

4. Procédé mis en œuvre par ordinateur selon la revendication 2 ou 3, comprenant en outre :
la réception, par l'un ou plusieurs processeurs, de données d'utilisation d'énergie et de données de performance correspondant à l'une ou plusieurs opérations de génération d'eau atmosphérique ; et
le stockage, par l'un ou plusieurs processeurs, de l'une ou plusieurs données d'entrée d'optimisation, des données d'utilisation d'énergie et des données de performance en tant qu'entrée d'entraînement d'optimisation étiquetée dans l'ensemble de données d'entraînement,
dans lequel, facultativement, le procédé mis en œuvre par ordinateur comprend en outre :
le réentraînement, par l'un ou plusieurs processeurs, du modèle d'apprentissage automatique d'optimisation sur la base au moins en partie de l'entrée d'entraînement d'optimisation étiquetée.

5. Procédé mis en œuvre par ordinateur selon l'une quelconque des revendications précédentes, comprenant en outre :
la génération, par l'un ou plusieurs processeurs, d'une sortie d'énergie optimisée pour le système de génération d'eau atmosphérique sur la base au moins en partie de l'une ou plusieurs prédictions d'énergie basées sur le temps et de données d'utilisation d'eau pour l'emplacement correspondant au système de génération d'eau atmosphérique ; et
la génération, par l'un ou plusieurs processeurs, de l'une ou plusieurs instructions de commande sur la base au moins en partie de la sortie d'énergie optimisée,
dans lequel, facultativement, les données d'utilisation d'eau sont basées, au moins en partie, sur des données d'entrée d'utilisateur ou des données de capteur provenant du système de génération d'eau atmosphérique.

6. Procédé mis en œuvre par ordinateur selon l'une quelconque des revendications précédentes, dans lequel l'une ou plusieurs données d'entrée d'optimisation comprennent des données de capteur provenant du système de génération d'eau atmosphérique, dans lequel, facultativement, l'une ou plusieurs données d'entrée d'optimisation comprennent des données météorologiques actuelles ou des données météorologiques prospectives provenant d'une ou plusieurs sources d'informations externes.

7. Procédé mis en œuvre par ordinateur selon l'une quelconque des revendications précédentes, dans lequel le système de génération d'eau atmosphérique est associé à un groupe d'une pluralité de systèmes de génération d'eau atmosphérique connectés, chacun de la pluralité de systèmes de génération d'eau atmosphérique connectés est associé à un emplacement différent, et l'une ou plusieurs données d'entrée d'optimisation comprennent des données de capteur à distance provenant de chacun de la pluralité de systèmes de génération d'eau atmosphérique connectés.

8. Procédé mis en œuvre par ordinateur selon l'une quelconque des revendications précédentes, dans lequel la communication de l'une ou plusieurs instructions de commande comprend :
la fourniture, par l'un ou plusieurs processeurs, de l'une ou plusieurs instructions de commande à un dispositif périphérique qui est (i) physiquement disposé sur le système de génération d'eau atmosphérique et (ii) électriquement connecté à au moins un de l'un ou plusieurs contrôleurs du système de génération d'eau atmosphérique.

9. Système informatique (804 ; 816) comprenant une mémoire (806) et un ou plusieurs processeurs (808) couplés en communication à la mémoire, l'un ou plusieurs processeurs étant configurés pour :
recevoir une ou plusieurs données d'entrée d'optimisation pour un temps et un emplacement associés à une opération d'un système de génération d'eau atmosphérique (110 ; 600), dans lequel le système de génération d'eau atmosphérique comprend un système destiné à extraire de la vapeur d'eau depuis l'air atmosphérique au moins en partie par condensation de la vapeur d'eau de l'air atmosphérique à l'aide d'une boucle de trajet d'écoulement de dessiccant ;
générer, à l'aide d'un modèle d'apprentissage automatique d'optimisation, une ou plusieurs prédictions d'énergie basées sur le temps pour le système de génération d'eau atmosphérique sur la base au moins en partie de l'une ou plusieurs données d'entrée d'optimisation ; et
communiquer une ou plusieurs instructions de commande à un ou plusieurs contrôleurs (812) du système de génération d'eau atmosphérique pour lancer une ou plusieurs opérations de génération d'eau atmosphérique sur la base au moins en partie de l'une ou plusieurs prédictions d'énergie basées sur le temps, dans lequel l'une ou plusieurs prédictions d'énergie basées sur le temps comprennent une dépense d'énergie et une sortie d'eau prévues du système de génération d'eau atmosphérique.

10. Système informatique selon la revendication 9, dans lequel le modèle d'apprentissage automatique d'optimisation est préalablement entraîné, à l'aide d'une ou plusieurs techniques d'apprentissage supervisé, sur la base au moins en partie d'un ensemble de données d'entraînement comprenant une pluralité d'entrées d'entraînement d'optimisation étiquetées et chacune de la pluralité d'entrées d'entraînement d'optimisation étiquetées comprend un ensemble de données d'entrée d'optimisation et de données de performance historiques correspondant à l'ensemble de données d'entrées d'optimisation historiques.

11. Système informatique selon la revendication 10, dans lequel les données de performance sont indicatives d'une sortie d'eau de réalité de terrain provenant du système de génération d'eau atmosphérique sur la base au moins en partie d'une ou plusieurs opérations de génération d'eau atmosphérique historiques.

12. Système informatique selon l'une quelconque des revendications 9 à 11, dans lequel l'un ou plusieurs processeurs sont en outre configurés pour :
générer une sortie d'énergie optimisée pour le système de génération d'eau atmosphérique sur la base au moins en partie de l'une ou plusieurs prédictions d'énergie basées sur le temps et des données d'utilisation d'eau pour l'emplacement correspondant au système de génération d'eau atmosphérique ; et
générer l'une ou plusieurs instructions de commande sur la base au moins en partie de la sortie d'énergie optimisée,
dans lequel, facultativement, les données d'utilisation d'eau sont basées, au moins en partie, sur des données d'entrée d'utilisateur ou des données de capteur provenant du système de génération d'eau atmosphérique.

13. Système informatique selon l'une quelconque des revendications 9 à 12, dans lequel l'une ou plusieurs données d'entrée d'optimisation comprennent des données de capteur provenant du système de génération d'eau atmosphérique, dans lequel, facultativement, l'une ou plusieurs données d'entrée d'optimisation comprennent des données météorologiques actuelles ou des données météorologiques prospectives provenant d'une ou plusieurs sources d'informations externes.

14. Système de génération d'eau atmosphérique, qui comprend :
l'un ou plusieurs contrôleurs, dans lequel l'un ou plusieurs contrôleurs sont connectés électriquement à un ou plusieurs sous-systèmes du système de génération d'eau atmosphérique ; et
le système informatique selon l'une quelconque des revendications 9 à 13.

15. Système de génération d'eau atmosphérique selon la revendication 14, dans lequel le système de génération d'eau atmosphérique est associé à un groupe d'une pluralité de systèmes de génération d'eau atmosphérique connectés, chacun de la pluralité de systèmes de génération d'eau atmosphérique connectés sont associés à un emplacement différent, et l'une ou plusieurs données d'entrée d'optimisation comprennent des données de capteur à distance provenant de chacun de la pluralité de systèmes de génération d'eau atmosphérique connectés.
